# DEMANDE DE BREVET EUROPEEN

(11) **EP 1 170 951 A2**
(43) Date de publication de la demande: **09.01.2002**
(21) Numéro de dépôt: 01401562.2
(22) Date de dépôt: 14.06.2001
(51) Int. Cl.: H04N 7/173

(54) **Dispositif et procédé de gestion à distance d'un réseau de systèmes de reproduction d'information audiovisuelles**

(30) Priorité: 21.06.2000 US 598170
(71) Demandeur: TOUCHTUNES MUSIC CORPORATION, Las Vegas, NV 89104 (US)
(72) Inventeur: Nathan, Guy, Nun's Island, Quebec H3E 1H7 (CA); Clement, Hugues, Montreal, Quebec H2G 2T9 (CA); Mastronardi, Tony, Pierrefonds, Qubec H8Y 3L2 (CA)
(74) Mandataire: Debay, Yves

(57) **Abrégé**

Dispositif de gestion d'un réseau de systèmes de reproduction d'informations audiovisuelles ou juke-box, caractérisé en ce qu'il comprend une base de données (11) comprenant une pluralité d'ensemble de tableaux (1101 à 1111), chaque tableau regroupant des informations, soit sur la constitution d'un juke-box (1102, 1104), soit sur l'utilisation du juke-box (1108, 1110, 1111 ), soit sur le paiement des redevances (1109), la base de données (11) est gérée par un serveur informatique (10) comportant des moyens de connexion avec les systèmes de reproduction d'informations audiovisuelles (100.1 à 100.n) pour, premièrement, recevoir des messages envoyés par chaque dispositif de reproduction d'informations audiovisuelles (100.1 à 100.n) et contenant des informations nécessaires à la mise à jour des ensemble de tableaux déterminés (1101 à 1111) de la base de données et, deuxièmement, pour émettre des messages vers chaque dispositif de reproduction d'informations audiovisuelles (100.1 à 100.n) afin de mettre à jour les données ou programme de chaque dispositif de reproduction d'informations audiovisuelles (100.1 à 100.n) par les informations mémorisées dans au moins un ensemble de tableaux (1110) de la base de données et transmises dans ce message.

## Description

La présente invention concerne un dispositif et un procédé de gestion d'un réseau de systèmes de reproduction d'informations audiovisuelles.

Il est connu par la demande internationale de brevet WO 96/12255 un dispositif de reproduction d'informations audiovisuelles communément appelé juke-box. Ce juke-box est élaboré autour d'une unité centrale gérant des moyens de reproduction audiovisuelle et des moyens de mémorisation d'au moins une information audiovisuelle correspondant au moins à la reproduction sonore d'une chanson. L'unité centrale gère également des moyens de télécommunication tels qu'un modem pour permettre, notamment le téléchargement d'informations audiovisuelles à partir d'un serveur central. La gestion des commandes de nouvelles chansons et le paramétrage nécessitent soit le déplacement d'un opérateur sur les lieux d'implantation du juke-box, soit l'utilisation par l'opérateur d'un ordinateur possédant une liaison avec le serveur central. De plus, les opérations de gestion réalisables, par l'intermédiaire de la liaison avec le serveur central, sont limitées à la commande de nouvelles sélections musicales.

La présente invention a donc pour objet de pallier les inconvénients de l'art antérieur en proposant un dispositif de gestion d'un réseau de systèmes de reproduction d'informations audiovisuelles permettant de gérer l'ensemble des informations relatives aux systèmes de reproduction d'informations audiovisuelles et à leurs fonctionnements de façon simple et centralisée.

Cet objectif est atteint par un dispositif de gestion d'un réseau de systèmes de reproduction d'informations audiovisuelles ou juke-box, selon la revendication 1.

Des développements supplémentaires de l'invention sont décrits dans les revendications 2 à 31.

Un deuxième objectif de l'invention est de proposer un procédé de gestion d'un réseau de systèmes de reproduction d'informations audiovisuelles ou juke-box.

Ce deuxième objectif est atteint par un procédé selon la revendication 32.

D'autres particularités et avantages de la présente invention apparaîtront plus clairement à la lecture de la description ci-après faite en référence aux dessins annexés dans lesquels :
- la figure 1 représente un synoptique d'un système utilisant un serveur selon l'invention,
- la figure 2 représente un organigramme simplifié de la structure d'une base de données du serveur utilisée par le système selon l'invention,
- les figures 3A à 3F représentent un organigramme détaillé de la structure d'une base de données utilisée par le dispositif selon l'invention,
- la figure 4 représente un exemple de dispositif de reproduction audiovisuelle,
- les figures 5A à 5H représentent différents tableaux permettant de visualiser les informations de la base de données.

Avant de décrire en détail le dispositif de gestion à distance du dispositif de reproduction audiovisuelle selon l'invention, il convient de rappeler la constitution d'un dispositif de reproduction audiovisuelle et son mode de fonctionnement.

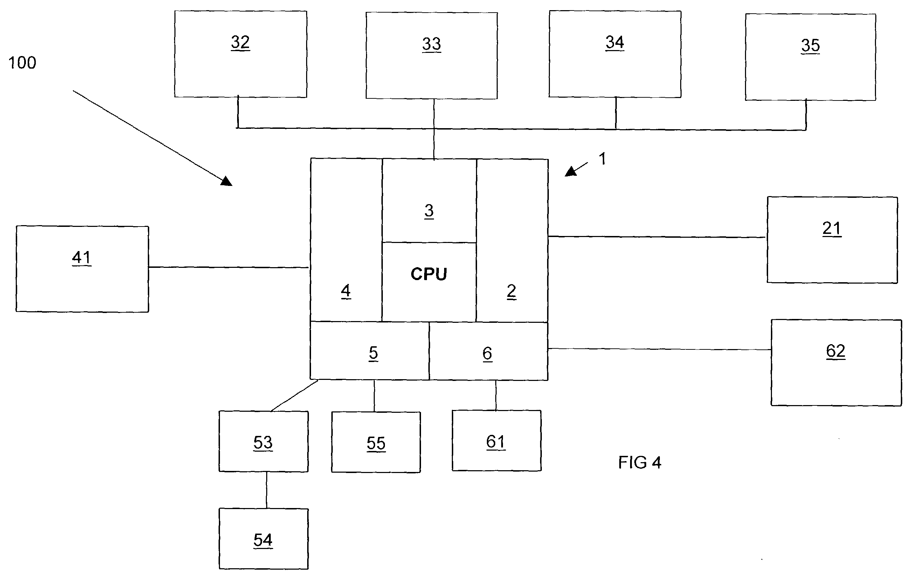

La figure 4 représente un exemple de dispositif de reproduction d'informations audiovisuelles. Un tel système est décrit, notamment dans la demande de brevet internationale WO 96/12255 déposée par la requérante. De préférence, mais cependant de manière non limitative, ce dispositif de reproduction d'informations audiovisuelles utilise les éléments matériels énumérés et référencés ci-après.

L'unité centrale (1) à microprocesseur est un système compatible PC de haute performance, le choix lors de la mise en oeuvre s'est porté sur un système du type Intel pentium qui possède des moyens de mémorisation et au moins les caractéristiques suivantes :
- compatibilité avec le bus local Vesa,
- antémémoire du processeur: 256 kO,
- mémoire vive: RAM de 32 MO
- ports série et parallèle de haute performance,
- adaptateur graphique type SVGA à microprocesseur
- contrôleur de bus type SCSI/2,
- mémoire vive RAM statique auto-alimentée.

Toute autre unité centrale possédant des performances équivalentes ou supérieures pourra être utilisée dans l'invention.

Cette unité centrale commande et gère un circuit de commande de son (5), un circuit (4) de commande des télécommunications, un circuit (3) de commande des entrées, un circuit (2) de commande de la mémorisation de masse, un circuit (6) de commande des moyens de visualisation (62). Les moyens de visualisation se composent principalement d'un moniteur vidéo (62) à écran plat sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo.

Faisant partie également des moyens de mémorisation, des modules de stockage (21) utilisant des disques durs de type SCSI haute vitesse et haute capacité sont associés aux moyens de mémorisation déjà présents dans le dispositif à microprocesseur. Ces modules servent au stockage d'informations audiovisuelles.

Un adaptateur de modem de télécommunications (41) haute vitesse 28,8 kbps est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur-tuner (53) relié au circuit électronique (5) de type synthétiseur de musique prévu pour supporter un grand nombre de sources d'entrée tout en fournissant une sortie présentant une qualité de type CD (disque compact), telle que, par exemple, l'adaptateur audio multimédia à microprocesseur, du type carte son.

Le dispositif de reproduction audiovisuelle gère, par le biais de son circuit contrôleur d'entrée (3), un écran tactile (33) incluant un panneau de revêtement de la vitre utilisant la "technologie avancée d'onde de surface" ainsi qu'un contrôleur de bus de type AT. Cet écran tactile disposé devant le moniteur permet de sélectionner, sur l'affichage du moniteur vidéo (62) ou l'écran d'un téléviseur (61), diverses informations de sélection utilisées par les clients, ainsi que des informations de commande et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Un dispositif de paiement de redevances (35) est également relié au circuit d'interface d'entrée (3). Il est également possible d'utiliser tout autre dispositif qui permette la réception de tout mode de paiement par pièces, billets, jetons, cartes magnétiques ou à puce ou combinaison des moyens de paiement.

Le système est logé dans un châssis ou bâti en acier.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même, un système de haut-parleurs sans fil peut être utilisé par le système.

Le dispositif de reproduction d'informations audiovisuelles comprend également un circuit intégré (non représenté), alimenté électriquement uniquement lorsqu'une opération de lecture ou d'écriture est effectuée, et capable de stocker de l'information série dans une mémoire non volatile. Le système d'exploitation peut lire ou écrire des informations sur le circuit, par l'intermédiaire d'un circuit de commande pour conserver notamment le numéro de série du juke-box, et les différents paramètres de fonctionnement. Ce circuit est connu dans l'art antérieur sous le nom anglais « Ibutton ».

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité.

Dans la suite de la description, les expressions « dispositif de reproduction d'informations audiovisuelles » et « juke-box» désignent le même objet.

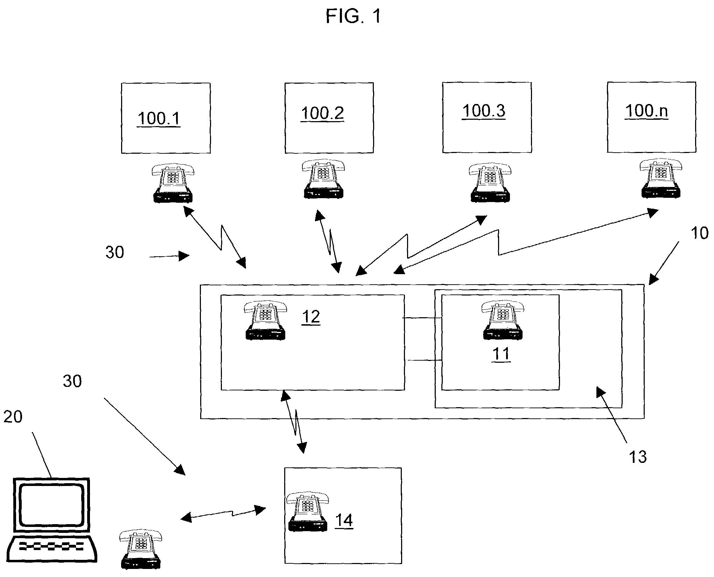

La figure 1 représente un synoptique du dispositif selon l'invention. Selon l'art antérieur, chaque dispositif (100.1 à 100.n) de reproduction audiovisuelle communique avec le serveur central (10) par l'intermédiaire de ses moyens de télécommunication respectif constitué par exemple d'une carte modem (41) reliée au réseau téléphonique (30). Le serveur central (10) comprend à cet effet des moyens de communication (121, 111) tels que, par exemple, au moins un modem connecté au réseau téléphonique. Le serveur (10) central gère également une base (11) de données regroupant pour chaque dispositif (100.1 à 100.n) de reproduction d'informations audiovisuelles toutes les informations relatives à son fonctionnement, c'est-à-dire les paramètres de fonctionnement de chaque dispositif (100.1 à 100.n) de reproduction d'informations audiovisuelles, leur numéro d'identification, la liste des chansons mémorisées sur chaque dispositif (100.1 à 100.n) de reproduction d'informations audiovisuelles, chaque opérateur chargé de la gestion d'un groupe de dispositifs (100.1 à 100.n) de reproduction d'informations audiovisuelles. La base de données comprend également les statistiques relatives à l'utilisation de chaque dispositif (100.1 à 100.n) de reproduction d'informations audiovisuelles, c'est-à-dire la liste des chansons jouées ainsi que la date à laquelle chaque chanson a été jouée, la liste et la date d'éventuels incidents survenus pendant l'utilisation de chaque dispositif (100.1 à 100.n) de reproduction d'informations audiovisuelles, notamment la mise hors tension, les coupures de communication, le nombre de fois où les moyens de paiement n'ont pas accepté l'argent introduit ou le paiement proposé. De même, la base de données comprend la liste des chansons disponibles stockées dans les moyens de mémorisation du serveur central (10), les informations audiovisuelles nécessaires à la reproduction de ces chansons, ainsi que les outils de configuration nécessaires à l'installation du système d'exploitation de chaque dispositif (100.1 à 100.n) de reproduction d'informations audiovisuelles. L'ensemble des informations contenues dans la base de données (11) est mis à jour par l'intermédiaire de communication, par exemple périodique, avec chaque dispositif (100.1 à 100.n) de reproduction d'informations audiovisuelles via le réseau téléphonique et les modems de chaque dispositif (100.1 à 100.n) de reproduction d'informations audiovisuelles et de la base de données ou du serveur central (10).

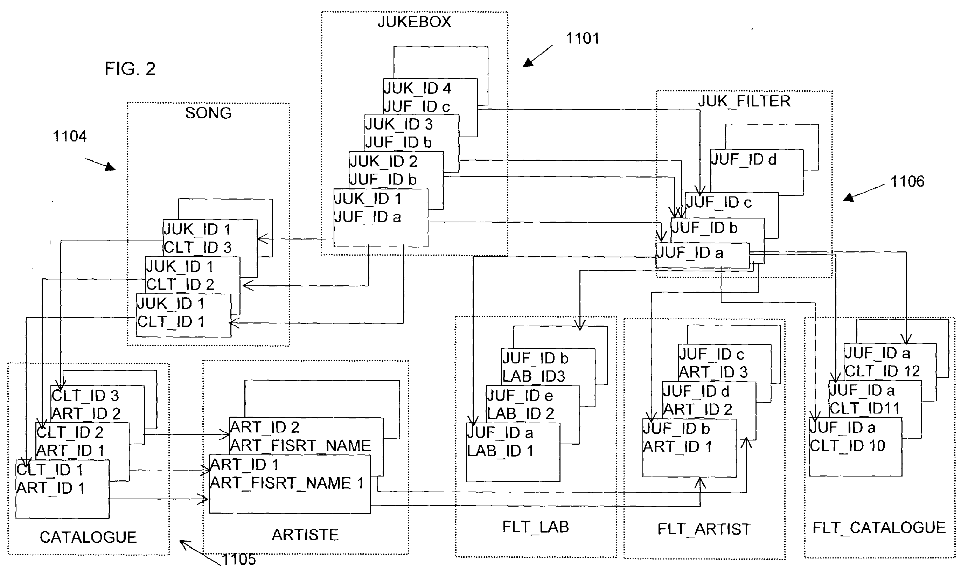

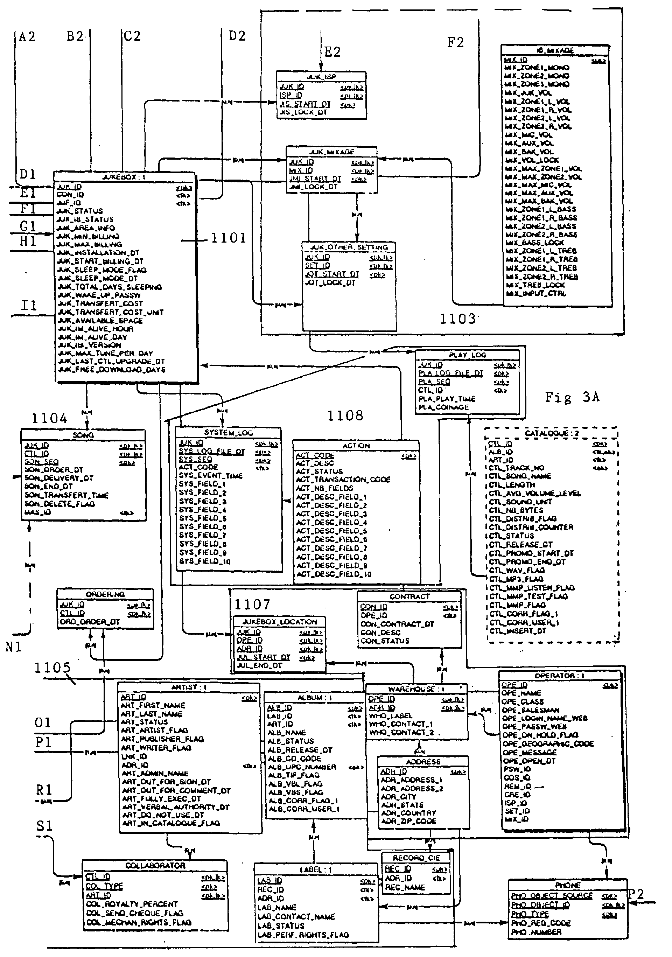

Un exemple de base de données (11) utilisée dans le dispositif selon l'invention va à présent être décrit en référence aux figures 2 et 3A à 3F. L'ensemble des informations de la base de données (11) est stocké sous forme de tableaux. Chaque tableau regroupe les informations relatives à un thème ou structure ou fonctionnalité particulière des systèmes (100.1 à 100.n, fig. 1) de reproduction d'informations audiovisuelles. Chaque information est identifiée par un argument compris dans un tableau de la base de données (11). Les informations d'un tableau peuvent être liées à un autre tableau. Cette liaison est établie lorsqu'au moins un argument est commun aux deux tableaux.

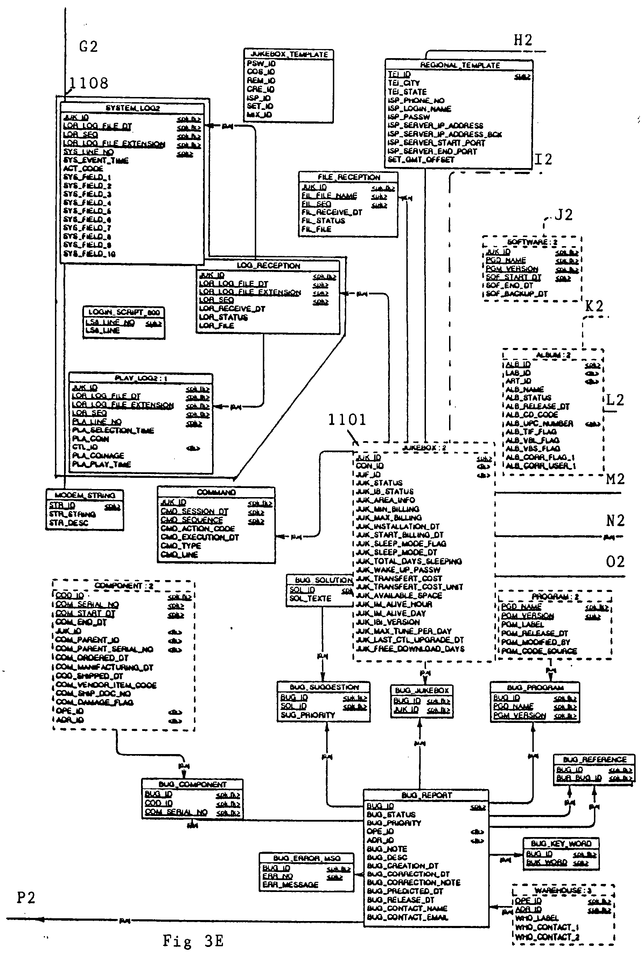

Selon l'invention, la base de données (11) comprend un premier ensemble de tableaux (1101, JUKEBOX, fig 2, 3A et 3E) représentant les informations concernant directement le dispositif (100.1 à 100.n, fig. 1) de reproduction d'informations audiovisuelles, comme par exemple son statut de fonctionnement (JUK_STATUS, fig. 3A), son numéro d'identification (JUK_ID, fig. 3C), l'espace mémoire disponible (JUK_AVAILABLE_SPACE, fig. 3A). Chaque table de ce premier ensemble de tableaux (1101) représente un dispositif (100.1 à 100.n, fig. 1) de reproduction d'informations audiovisuelles identifié dans cette table pour son numéro d'identification (JUK-ID, fig. 3A). De même, il est possible de mettre à jour les informations contenues dans la table du premier ensemble de tableaux (1101, fig. 3A) lors de la réception d'un message d'un juke-box. Pour ce faire, dès qu'un juke-box établit une communication avec le serveur (10, fig. 1), ce dernier traite le message reçu pour déterminer si des informations contenues dans la base de données doivent être mises à jour. Si le message contient des informations relatives à des modifications du statut du juke-box, le serveur modifie alors l'argument de la table du premier ensemble de tableaux (1101, fig. 3A), du juke-box concerné par les modifications reçues.

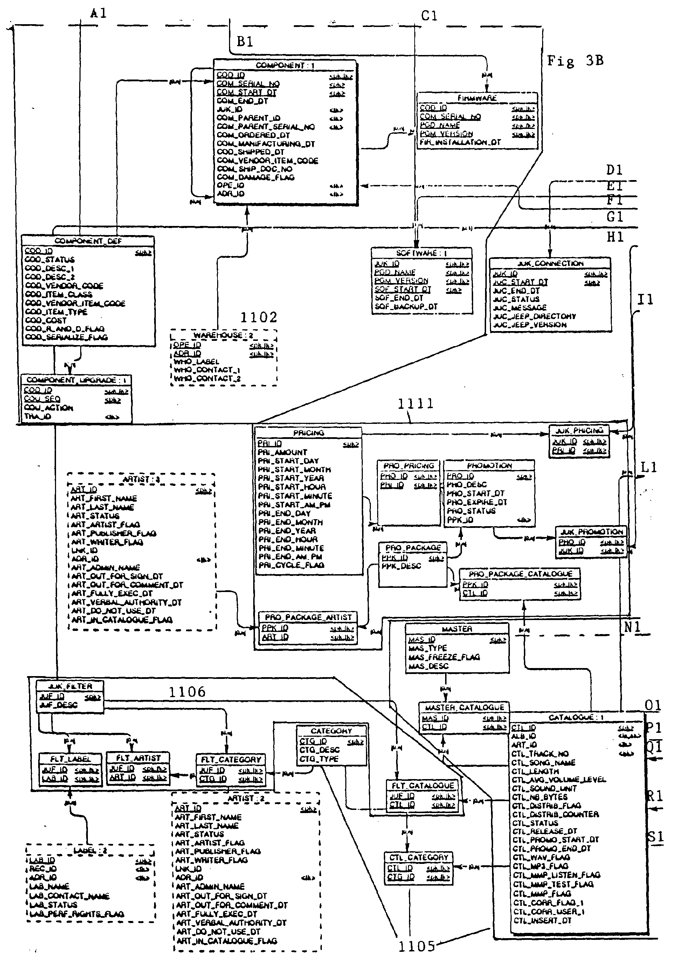

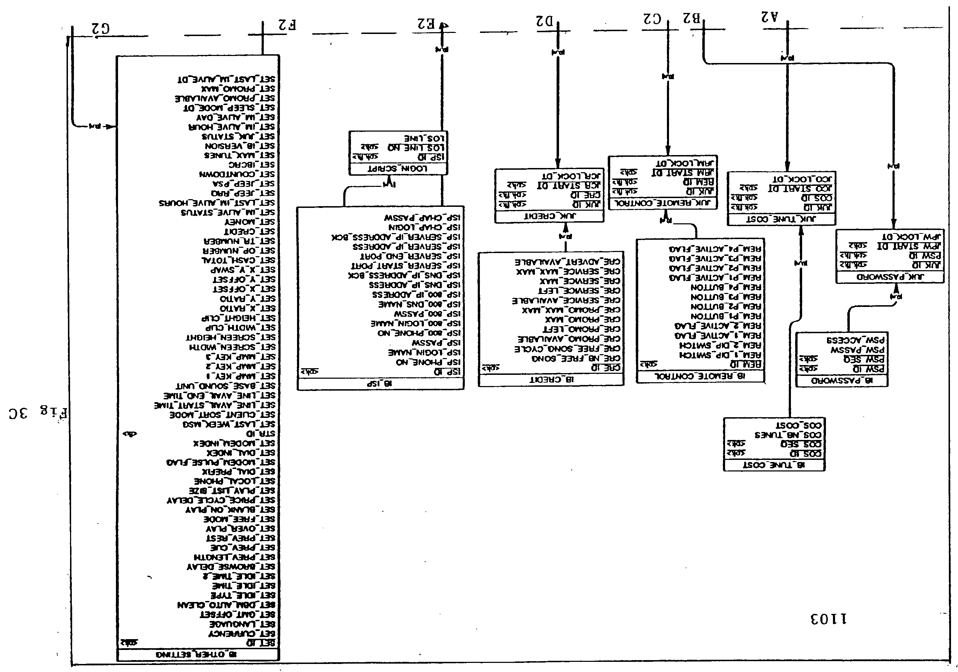

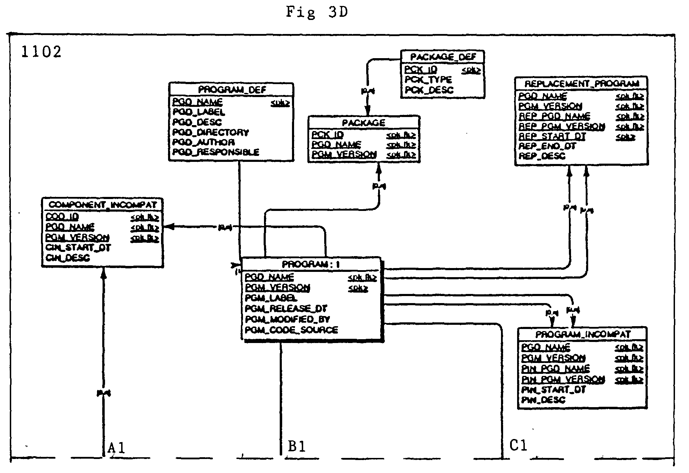

Ce premier ensemble de tableaux (1101, fig. 3A) est lié au moins à un deuxième ensemble de tableaux (1102, SOFTWARE, FIRMWARE, COMPONENT, fig. 3B et 3D) représentant les informations relatives aux constituants matériels et logiciels que l'on peut rencontrer sur un dispositif (100.1 à 100.n, fig. 1) de reproduction d'informations audiovisuelles. Les tableaux du deuxième ensemble de tableaux (1102, fig. 3B et 3D) comprennent dans le tableau (SOFTWARE, fig. 3B), notamment le nom (PGD_NAME, COD_ID, fig. 3B), la version (PGM_VERSION, fig. 3B) et la date d'installation (PGM_RELEASE_DT, fig. 3B) de chaque logiciel ou composant matériel. Chaque rangée des deuxièmes tableaux (1102, fig. 3B et 3D) correspond à un logiciel ou à un composant matériel. La liaison entre au moins une table du deuxième ensemble de tableaux (1102, fig. 3B et 3D) et une table du premier ensemble de tableaux (1101, fig. 3A et 3E) est réalisée par le numéro du dispositif (100.1 à 100.n, fig. 1) de reproduction d'informations audiovisuelles. Ainsi, grâce à cette liaison, le serveur peut déterminer tous les logiciels et composants matériels d'un dispositif (100.1 à 100.n, fig. 1) de reproduction d'informations audiovisuelles de numéro déterminé en recherchant dans chaque deuxième tableau les rangées comprenant le numéro d'identification du dispositif (100.1 à 100.n) de reproduction d'informations audiovisuelles.

Le premier ensemble de tableaux (1101, fig. 2 et fig 3A et 3E) est également lié à un troisième ensemble de tableaux (1103, JUKE_XXX, IB_XXX, fig. 3A et 3C) représentant les informations relatives à la configuration d'un dispositif (100.1 à 100.n, fig. 1) de reproduction d'informations audiovisuelles. Un premier groupe de tableaux du troisième ensemble de tableaux (1103, IB_XXX, fig 3A et 3C) regroupent tous les paramètres de fonctionnement des systèmes (100.1 à 100.n, fig. 1) de reproduction d'informations audiovisuelles et un deuxième groupe de tableaux du troisième ensemble de tableaux (1103, JUK_XXX, fig 3A et 3C) associe chaque juke-box à un jeu déterminé de paramètres contenu dans un groupe de tableau du troisième ensemble de tableaux (1103, IB-XXX, fig. 3A et 3C). On entend par paramètres de fonctionnement aussi bien les paramètres sur le volume de l'amplificateur définis pour un juke-box dans les tables (JUK_MIXAGE, fig. 3A) ou encore ceux définis pour le même juke-box dans les tables du I-Button (IB_MIXAGE, fig 3A), ou les paramètres sur le prix à acquitter (IB et JUK_TUNE_COST) pour sélectionner au moins une chanson, ou encore les paramètres de la liaison de télécommunication (JUK_ISP) avec le serveur (10, fig. 1), ou encore les paramètres de fonctionnement d'une éventuelle commande à distance d'un dispositif (100.1 à 100.n, fig. 1) de reproduction d'informations audiovisuelles. Ces paramètres sont définis pour un juke-box dans la table (JUK_REMOTE_CONTROL, fig. 3C) et tous les paramètres de fonctionnement des télécommandes de tous les juke-box sont définis par la table (IB_REMOTE_CONTROL, fig. 3C), un dispositif (100.1 à 100.n, fig. 1) de reproduction d'informations audiovisuelles étant associé à chaque fois à une table (JUK_TUNE_COST, IB_TUNE COST, JUK_REMOTE_CONTROL, IB_REMOTE_CONTROL, fig. 3C) du troisième ensemble de tableaux (1103, fig 3A et 3C). Chaque rangée d'une table mémorise les paramètres de fonctionnement d'un dispositif (100.1 à 100.n, fig. 1) de reproduction d'informations audiovisuelles de numéro déterminé (JUK_ID, fig. 3A et 3C). La liaison entre le premier et le troisième ensemble de tableaux (1103, fig. 3A et 3C) s'effectue, par exemple, par le numéro d'identification d'un dispositif (100.1 à 100.n, fig. 1) de reproduction d'informations audiovisuelles. Ainsi, grâce à cette liaison, le serveur (10) connaît tous les paramètres de fonctionnement d'un dispositif (100.1 à 100.n, fig. 1) de reproduction d'informations audiovisuelles de numéro déterminé en recherchant dans chaque troisième ensemble de tableaux (1103, fig. 3A et 3C) les tables comprenant le numéro (JUK_ID, fig 3A et 3C) du dispositif (100.1 à 100.n, fig. 1) de reproduction d'informations audiovisuelles déterminé, puis en recherchant dans les rangées de ces tables, le jeu de paramètres correspondant à la référence trouvée. De même, le serveur peut mettre à jour les informations contenues dans le troisième ensemble de tableaux (1103, fig. 3A et 3C) lors de la réception d'un message d'un juke-box. Par ce faire, dès qu'un juke-box établit une communication avec le serveur, celui-ci traite le message reçu pour déterminer si des informations contenues dans la base de données doivent être mise à jour. Si le message contient des informations relatives à des modifications des paramètres physiques, le serveur ajoute alors une nouvelle table ou remplace dans la rangée de la table concernée du troisième ensemble de tableaux (1103, fig 3A et 3C) la valeur fournie par les modifications.

Le premier ensemble de tableaux (1101, fig. 2, 3a et 3E) est également lié à au moins un quatrième ensemble de tableaux (1104, SONG, fig. 2 et 3A) représentant les informations relatives aux chansons mémorisées sur les systèmes (100.1 à 100.n, fig. 1) de reproduction d'informations audiovisuelles. Chaque chanson est identifiée par un numéro unique (CLT_ID, fig. 2 et 3A). Chaque rangée d'une table du quatrième ensemble de tableaux (1104, fig. 2 et 3A) représente une chanson mémorisée sur le dispositif (100.1 à 100.n, fig. 1) de reproduction d'informations audiovisuelles identifié par son identificateur en début de table. Le serveur peut mettre à jour les informations contenues dans les tables du quatrième ensemble de tableaux (1104) lors de la réception d'un message d'un juke-box. Par ce faire, dès qu'un juke-box établit une communication avec le serveur, celui-ci traite le message reçu pour déterminer si le message contient des informations spécifiques à la liste de chansons et décider si des informations contenues dans la base de données doivent être mise à jour. Si le message contient des informations relatives à des modifications de la liste des chansons contenues dans le juke-box, le serveur ajoute alors un tableau si le juke-box n'était pas encore enregistré ou modifie dans la table correspondante la rangée correspondant aux modifications reçues, c'est-à-dire soit la suppression d'une ou plusieurs chansons, soit l'ajout d'une ou plusieurs nouvelles chansons dans la liste des chansons disponibles sur le juke-box.

Un cinquième ensemble de tableaux (1105, CATALOGUE, fig. 2 et 3B) lié au quatrième ensemble de tableaux (1104, SONG, fig. 2 et 3A), par l'intermédiaire du numéro d'identification de la chanson (CLT_ID, fig. 2 et 3A), comprend une description de chaque chanson de la base de données. Chaque rangée du cinquième tableau (1105, fig. 2 et 3B) représente la description d'une chanson de la base de données (11, fig. 1). Ce cinquième ensemble de tableaux (1105, fig. 2 et 3B) permet notamment de déterminer si une chanson est disponible ou non pour être téléchargée sur un dispositif (100.1 à 100.n, fig. 1) de reproduction d'informations audiovisuelles à la demande d'un opérateur. En effet, une chanson n'est disponible notamment, que lorsque les accords relatifs à la copie de la chanson et à la reproduction de la chanson sont obtenus. Dans le cas contraire, la chanson est présente dans la base de données mais n'est pas disponible pour le téléchargement sur un juke-box. La liaison entre le premier ensemble de tableau (1101, fig. 2 et 3A) et le quatrième ensemble de tableaux (1104, fig. 2 et 3A) est réalisée par l'intermédiaire du numéro d'identification (JUK_ID, fig. 3A) du dispositif (100.1 à 100.n, fig. 1) de reproduction d'informations audiovisuelles. Ainsi, le serveur peut déterminer dans un premier temps le numéro d'identification (CTL_ID) de toutes les chansons mémorisées dans un dispositif (100.1 à 100.n, fig. 1) de reproduction d'informations audiovisuelles de numéro déterminé. Puis, dans une deuxième temps le serveur peut déterminer notamment le nom (CTL_SONG_NAME, fig. 3B) de toutes les chansons présentes sur le dispositif (100.1 à 100.n, fig. 1) de reproduction d'informations audiovisuelles déterminé par son numéro d'identification (JUK-ID), par l'intermédiaire de la liaison entre le quatrième (1104, fig. 2 et 3A) et le cinquième (1105, fig. 2 et 3B) ensemble de tableaux.

Le quatrième ensemble de tableaux (1104, fig. 2 et 3A ) est également lié à un sixième ensemble de tableaux (1106, fig. 2 et 3B) représentant les informations relatives à des filtres permettant à un opérateur d'interdire le téléchargement d'une ou plusieurs chansons déterminées par des groupes de tables spécifiques. La détermination de la ou des chansons est réalisée par un premier groupe de tables spécifiques identifiées par le numéro d'identification de la ou des chansons (FLT_CATALOGUE, fig. 2 et 3B), ou par un deuxième groupe de tables spécifiques identifiées par le numéro d'identification de l'interprète de la ou les chansons (FLT_ARTIST, fig. 2 et 3B) ou un troisième groupe de tables spécifique identifiées par le numéro d'identification de la maison de disques de la ou des chansons (FLT_LABEL, fig. 2 et 3B) ou par un quatrième groupe de tables spécifiques identifiées par le numéro d'identification de la catégorie (FLT_CATEGORY, fig. 3B) auquel appartient la ou les chansons. Chaque groupe de tables d'un sixième ensemble de tableaux (1106, fig. 2 et 3B) représente un filtre déterminé pour une chanson, un interprète, une maison de disque, ou une catégorie. Une des tables (JUK_FILTER, fig. 2 et 3B) du sixième ensemble de tableaux (1106, fig. 2 et 3A) est également lié au premier ensemble de tableaux (1101, fig. 3A) et comprend la description (JUK_DESC, fig. 3B) du filtre affecté à chaque juke-box par le numéro d'identification du filtre (JUF_ID) qui est associé dans chaque table (JUKEBOX, 1101, fig. 3A) avec l'identifiant du juke-box donné (JUK_ID). Le premier tableau (1101, fig. 3A) comprend également un argument correspondant au numéro du filtre (JUF_ID). Ainsi, le filtre d'un juke-box déterminé est défini en recherchant dans le sixième ensemble de tableaux (1106, fig. 2 et 3B) la ou les tables comprenant le numéro (JUF_ID) du filtre. De même, il est possible pour un opérateur d'affecter un même numéro de filtre à un ou plusieurs systèmes (100.1 à 100.n, fig. 1) de reproduction d'informations audiovisuelles.

Le premier tableau (1101, fig. 3A et 3E) est également lié par l'identifiant (JUK_ID) à un septième ensemble de tableaux (1107, JUKE_LOCATION, fig. 3A) représentant les informations relatives aux opérateurs des systèmes (100.1 à 100.n, fig. 1) de reproduction d'informations audiovisuelles. Ces informations comprennent notamment un identifiant de l'opérateur (OPE_ID, fig. 3A) qui permet d'accéder à une table spécifique (OPERATOR, fig. 3A) à chaque opérateur. Chaque tableau (WAREHOUSE, ADDRESS, CONTRACT, fig. 3A) du septième ensemble de tableaux (1107, fig. 3A) correspond à une table associée à un opérateur déterminé. La liaison entre le premier (1101, fig. 3A) et le septième tableau (1107, fig. 3A) est réalisée par l'intermédiaire de l'identifiant de l'opérateur (OPE_ID). Pour ce faire, le premier tableau (1101, fig. 3A) comprend donc un argument (JUK_ID) qui permet de trouver dans la table (JUKE_LOCATION, fig. 3A) de localisation du juke-box, l'argument (OPE_ID) associé correspondant à l'opérateur propriétaire ou locataire du dispositif (100.1 à 100.n, fig. 1) de reproduction d'informations audiovisuelles. Ainsi, cette liaison permet notamment au serveur de déterminer pour un numéro d'opérateur déterminé quels sont les numéros de dispositif (100.1 à 100.n, fig. 1) de reproduction d'informations audiovisuelles dont l'opérateur a la gestion. La table (JUKE-LOCATION, fig. 3A) du septième ensemble de tableaux (1107, fig. 3A) comprend également le lieu d'implantation du juke-box (ADR_ID), ainsi que la date (JUL_START_DT) à laquelle le juke-box a été installé en vue de sa location dans le lieu d'implantation et la date d'expiration de la location.

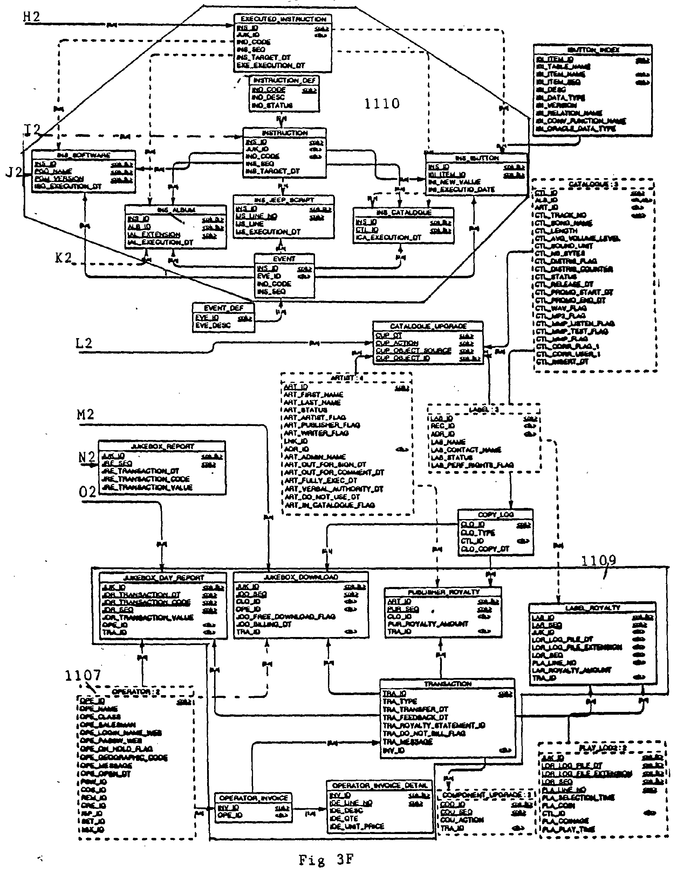

Le premier ensemble de tableaux (1101, fig. 2 et 3Aet 3E) est également lié à un huitième ensemble de tableaux (1108, fig. 3A et 3E) représentant les informations relatives au journal de bord d'un dispositif (100.1 à 100.n, fig. 1) de reproduction d'informations audiovisuelles. Ces informations représentent tous les événements qui interviennent sur le dispositif (100.1 à 100.n, fig. 1) de reproduction d'informations audiovisuelles et en particulier toutes les fois qu'une chanson est diffusée, une rangée est alors inscrite dans une table du huitième ensemble de tableaux (1108, PLAY_LOG, fig. 3A). De même, chaque fois qu'une somme d'argent est introduite dans le dispositif (100.1 à 100.n, fig. 1) de reproduction d'informations audiovisuelles une nouvelle rangée est inscrite, par exemple, dans un autre tableau du même type (SYSEM_LOG, fig. 3A). Les informations recueillies dans ces tableaux permettent, notamment de calculer les redevances qui doivent être réglées aux artistes ou aux éditeurs ou aux auteurs des chansons diffusées, mais également de connaître exactement quelles sont les chansons qui ont été jouées dans une journée, une semaine, ou une période déterminée, sur un dispositif (100.1 à 100.n, fig. 1) de reproduction d'informations audiovisuelles déterminé.

Les informations relatives aux calculs des redevances sont, par exemple, centralisées dans un neuvième ensemble de tableaux (1109, fig. 3F), comprenant les groupes de tables (JUKE_DAY_REPORT, fig. 3F) liés au huitième ensemble de tableaux (1108, fig. 3E et 3A). Le huitième ensemble de tableaux (1108, SYSTEM_LOG, PLAY_LOG, fig. 3E et 3A) est mis à jour chaque fois que le serveur reçoit un fichier de compte rendu (log file) lors d'une communication établie entre le serveur et un juke-box. Chaque événement contenu dans le fichier de compte rendu transmis par le juke-box fait l'objet d'un traitement par le serveur. Ce traitement consiste à ajouter une rangée dans l'une des tables (1108, SYSTEM_LOG, PLAY_LOG, fig. 3A et 3E) du huitième ensemble de tableaux pour chaque évènement. Les évènements sont, par exemple classés en deux catégories. Les premiers évènements sont les diffusions de chansons sur le juke-box et sont mémorisés dans le groupe de tableaux (PLAY_LOG, fig. 3A, 3E et 3F), et les deuxièmes événements sont les autres opérations intervenues sur le juke-box, comme par exemple, l'introduction de somme d'argent dans les moyens de paiement et sont mémorisés dans le groupe de tableaux SYSTEM_LOG, fig. 3A et 3E.

Ainsi, pour le calcul des redevances, dès qu'une table est ajoutée dans le groupe de tableaux (PLAY_LOG, fig. 3A, 3E et 3F) contenant la trace des diffusions de chansons, une table est également ajoutée dans le groupe de tables (1109, LABEL_ROYALTY, fig. 3F) pour compter le nombre de fois où une chanson est diffusée et pour multiplier ce nombre par un taux de redevance (LAR_ROYALTY_AMOUNT, fig. 3F) compris dans ce groupe de tables , pour obtenir la somme qui doit être acquittée au titre de redevance.

De même, une copie de chanson réalisée sur un juke-box donne lieu au paiement de redevance à l'éditeur de la chanson. Pour ce faire, le quatrième ensemble de tableaux (1104, fig. 3A et 2) comprenant toutes les chansons de chaque juke-box est lié à un tableau (1109, PUBLISHER_ROYALTY, fig. 3F) du neuvième ensemble de tableaux, de sorte que dès qu'une rangée est ajoutée dans une table (1104, SONG, fig. 2 et 3A) du quatrième ensemble de tableaux, une rangée est ajouté dans une table (1109, PUBLISHER_ROYALTY, fig. 3F) du neuvième groupe de tableaux, pour compter le nombre de fois où une chanson est copiée et pour multiplier ce nombre par un taux de redevance (PUR_ROYALTY_AMOUNT, fig. 3F) compris dans cette table du neuvième ensemble de tableaux, pour obtenir la somme qui doit être acquittée au titre de redevance.

Enfin, chaque utilisation d'un juke-box donne lieu au paiement d'un forfait par l'opérateur du juke-box. La facturation de ce forfait s'effectue grâce au groupe de tables (1108, SYSTEM_LOG, fig. 3A et 3E), du huitième ensemble de tableaux. En effet, chaque table de ce groupe de tables correspond à un évènement survenu sur chaque juke-box. Ainsi, chaque fois qu'une somme d'argent a été introduite dans un juke-box, une table est ajoutée. Ce huitième ensemble de tableaux est lié à un groupe de tables du neuvième ensemble de tableaux (1109, JUKEBOX_REPORT, fig. 3F) permettant de définir par jour et pour chaque juke-box d'un opérateur la somme d'argent introduite dans chaque juke-box. De même, il est possible de connaître pour chaque juke-box, le détail des opérations effectuées dans une journée par l'intermédiaire d'un autre groupe de tables du neuvième ensemble de tableaux (1109, JUKEBOX_REPORT, fig. 3F).

Le premier ensemble de tableaux (1101, fig. 2, 3A et 3E) est également lié à au moins un dixième ensemble de tableaux (1110, INSTRUCTION, fig. 3F) représentant les informations relatives aux instructions qui doivent être transmises à au moins un dispositif (100.1 à 100.n, fig. 1) de reproduction d'informations audiovisuelles déterminé. Au moins un groupe de tables du dixième ensemble de tableaux (1110, INSTRUCTION_DEF, fig. 3F) comprend une description des instructions (INS_DESC, fig. 3F). De même, la liaison entre le premier ensemble de tableaux (1101, fig. 2, 3A et 3F) et le dixième ensemble de tableaux (1110, fig. 3F) est réalisée par l'intermédiaire du numéro d'identification (JUK.ID) du dispositif (100.1 à 100.n, fig. 1) de reproduction d'informations audiovisuelles. Ainsi, le serveur peut collecter toutes les instructions destinées à un dispositif (100.1 à 100.n, fig. 1) de reproduction d'informations audiovisuelles déterminé, puis les télécharger sur le juke-box identifié lorsque celui-ci établit une communication avec le serveur. Ces instructions peuvent être, par exemple, une mise à jour d'au moins un logiciel (INS_SOFTWARE, fig 3F) installé sur le dispositif (100.1 à 100.n, fig. 1) de reproduction d'informations audiovisuelles, un téléchargement de nouvelles chansons (INS_CATALOGUE, INS_ALBUM, fig. 3F) commandées par l'opérateur du dispositif (100.1 à 100.n, fig. 1) de reproduction d'informations audiovisuelles, une modification des paramètres de fonctionnement (INS_IBUTTON) du dispositif (100.1 à 100.n, fig. 1) de reproduction d'informations audiovisuelles. Le groupe de tables (1110, INSTRUCTION, fig 3F) contenant l'identification (JUK-ID) du juke-box et une identification des instructions (INS_ID) à transmettre à ce juke-box sont consultés systématiquement par le serveur (10) lorsqu'un dispositif (100.1 à 100.n, fig. 1) de reproduction d'informations audiovisuelles établit une communication avec le serveur (10) de façon à vérifier que des instructions mémorisées dans le dixième ensemble de tableaux (1110, fig. 3F) sont destinées ou non au dispositif (100.1 à 100.n, fig. 1) de reproduction d'informations audiovisuelles qui vient d'établir la communication avec le serveur (10). La liaison entre les différents groupes de tables du dixième ensemble de tableaux est réalisée par un numéro d'identification des instructions (INS_ID). L'ensemble des instructions contenues dans le dixième ensemble de tableau (1110, fig. 3F) peut être préparé et mémorisé dans la base de données en avance par rapport à la date à laquelle ces instructions doivent être appliquées effectivement sur le juke-box. L'envoie de ses instructions vers le juke-box, n'étant réalisées au plus tôt qu'à la date d'application souhaité, lorsque le juke-box établi une communication avec le serveur (10).

Le premier ensemble de tableaux (1101) est lié à au moins un onzième ensemble de tableaux (1111, JUK_PROMOTION, fig. 3B) représentant les informations relatives à la mise en place d'opérations promotionnelles sur les juke-box par JUK_ID au travers de la table (PRICING, fig. 3B) qui indique l'argument PRI_ID d'accès à une des tables du onzième ensemble de tableaux (1111, fig. 3B). Ces opérations consistent essentiellement à des modifications du prix de certaines chansons installées sur les juke-box. Les chansons concernées par les promotions peuvent, par exemple, être commandées par un promoteur différent de l'opérateur du juke-box. La commande de ces chansons et le paiement des redevances pour la diffusion de ces chansons sont, par exemple, affectés au promoteur et non à l'opérateur. Les informations relatives aux chansons faisant l'objet d'une promotion sont contenues dans un des onzièmes tableaux (1111, PRO_PACKAGE, fig. 3B). De même, les modifications des prix des chansons faisant l'objet de la promotion sont contenues dans un des onzièmes tableaux (1111, PRICING, fig. 3B). Le paiement des chansons commandées par le promoteur est réalisé par l'intermédiaire d'une table (PRO_PACKAGE_CATALOGUE, fig. 3B) qui regroupe les identifiants (CTL_ID) des chansons objets de la promotion. Cette table est liée par un argument (PPK_ID, fig. 3B) identifiant les groupes de chansons à une table (PROMOTION, fig. 3B) contenant la description de la promotion. Cette table (PROMOTION, fig. 3B) permet également de retrouver le promoteur. Ainsi, lors du calcul des redevances (décrit précédemment) le serveur consulte la table (PRO_PACKAGE_CATALOGUE, fig 3B) pour déterminer si les identifiants des chansons jouées sur un juke-box sont contenus dans cette table. Si un identifiant d'une chanson jouée sur le juke-box appartient à cette table alors la facturation de redevance sera effectuée au promoteur correspondant à l'identifiant (PRO_ID, fig. 3B) de la promotion à laquelle appartient la chanson.

Une description non limitative d'une pluralité de groupes de tables spécifiques de la base de données va à présent être faite en référence aux figures 3A à 3F.

Le groupe de tables spécifiques ACTION appartient au huitième ensemble de tableaux (1108, fig. 3A et 3F) et contient les définitions des actions utilisées dans un groupe de tables spécifiques SYSTEM_LOG (décrit ultérieurement) associé à un juke-box (JUK_ID). Chaque action est identifiée dans le groupe de tables spécifiques ACTION par un code (ACT_CODE). De même, chaque table spécifique ACTION correspond à une action particulière. Ainsi, à titre d'exemple, la table ACTION dont le code de l'action (ACT_CODE) est égal à « M » correspond à la description de l'action consistant en l'introduction d'une somme déterminée dans un juke-box.

Le groupe de tables spécifiques ADDRESS appartient au septième ensemble de tableaux (1107, fig. 3A) et contient toutes les adresses des différents intervenants dans le système selon l'invention, c'est-à-dire, les opérateurs, les maisons de disques, les interprètes de chansons. Chaque table correspond à un identifiant d'une adresse (ADR_ID) différente. Une adresse (ADR_ADDRESS_1) peut être identique pour plusieurs intervenants et se retrouver dans des tables différentes.

Le groupe de tables spécifiques ALBUM appartient au cinquième ensemble de tableaux (1105, fig. 2 et 3B) et contient toutes les informations relatives à tous les albums contenus dans la banque de chansons, c'est-à-dire le titre (ALB_NAME), l'artiste principal (ART_ID), la maison de disques (LAB_ID). Chaque album est identifié par un numéro unique (ALB_ID). Une table spécifique de ce groupe de tables correspond à l'identification d'un album.

Le groupe de tables spécifiques ARTIST appartient au cinquième ensemble de tableaux (1105, fig. 2 et 3B) et contient des informations relatives aux interprètes et/ou éditeurs et/ou auteurs des chansons comme, par exemple, les validations des accords pour la reproduction et la restitution des chansons. Une table spécifique de ce groupe de tables correspond à l'identification d'un interprète ou d'un éditeur ou d'un auteur.

Les tableaux BUG_COMPONENT, BUG_ERROR_MSG, BUG_JUKEBOX, BUG_KEY_WORD, BUG_PROGRAM, BUG_REFERENCE, BUG_REPORT, BUG_ SOLUTION, BUG_ SUGGESTION représentés figure 3E, sont utilisés pour archiver, résoudre ou proposer des solutions aux dysfonctionnements survenant dans la télégestion des juke-box ou dans le fonctionnement des programmes ou composants des juke-box.

Le groupe de tables spécifiques CATALOGUE appartient au cinquième ensemble de tableaux (1105, fig. 2 et 3A et 3B) et contient des informations relatives aux chansons contenues dans la base de données. Une table de ce groupe de tables permet d'identifier une chanson. Chaque table comprend notamment, le titre d'une chanson (CLT_SONG_NAME), et sa durée (CLT_LENGHT). Chaque table comprend également des informations (CLT_STATUS) permettant de déterminer si la chanson peut être jouée sur l'ensemble des juke-box.

Le groupe de tables spécifiques CATALOGUE_UPGRADE appartient au cinquième ensemble de tableaux (1105, fig. 3A et 3B) et permet d'archiver toutes les mises à jour qui sont intervenues dans le groupe de tables spécifiques CATALOGUE. Une table de ce groupe de tables correspond à une mise à jour.

Le groupe de tables spécifiques CATEGORY appartient au cinquième ensemble de tableaux (1105, fig. 3A et 3B) et regroupe la liste des catégories de chansons, c'est-à-dire le nom de la catégorie (CTG_TYPE), sa description (CTG_DESC) et un numéro d'identification (CTG_ID). Une catégorie regroupe les chansons d'un même genre, par exemple les chansons de jazz représentent une catégorie, et les chansons de Noël une autre catégorie.

Le groupe de tables spécifiques COLLABORATOR appartient au huitième ensemble de tableaux (1108, fig. 3A et 3B) et permet d'identifier les éditeurs et les auteurs des chansons. Un argument (COL_TYPE) prend une première valeur déterminée, par exemple P pour désigner un éditeur et prend une deuxième valeur déterminée , par exemple W, pour désigner un auteur. Cette différenciation est utilisée pour le calcul des redevances.

Le groupe de tables spécifiques COMMAND, fig. 3E contient toutes les commandes qui sont échangées entre le serveur et un juke-box, lorsqu'une communication s'est établit entre eux. Une table de ce groupe de tables correspond à une commande.

Le groupe de tables spécifiques COMPONENT, fig. 3B contient la liste de tous les composants matériels pouvant être installés sur un juke-box. Chaque table contient, notamment, le numéro de série (COM_SERIAL_NO) de chaque composant, et sa date d'installation (COM_STRAT_DT).

Le groupe de tables spécifiques COMPONENT_DEF appartient au deuxième ensemble de tableaux (1102, fig. 3B et 3D) et contient une description précise de tous les composants listés dans le groupe de tables spécifiques COMPONENT. Chaque table de ce groupe de tables contient notamment le coût des composants (COD_COST), et l'identification du fournisseur (COD_VENDOR_CODE).

Le groupe de tables spécifiques COMPONENT_INCOMPAT appartient au deuxième ensemble de tableaux (1102, fig. 3B et 3D) et contient des informations relatives à d'éventuelles incompatibilités entre les différents composants matériels pouvant être installés sur un juke-box.

Le groupe de tables spécifiques COMPONENT_UPGRADE appartient au deuxième ensemble de tableaux (1102, fig. 3B et 3D) et permet de garder une trace de toutes les modifications intervenues dans le groupe de tables spécifiques COMPONENT_DEF.

Le groupe de tables spécifiques COPY_LOG, fig. 3F est un tableau d'archivage qui conserve une trace de toutes les opérations de copie d'une chanson, nécessitant le paiement de redevances. Chaque table de ce groupe de tables contient notamment, le numéro d'identification de la chanson copiée (CLT_ID), et la date de la copie (CLO_COPY_DT). Certaines copies de chansons n'étant pas sujettes au paiement de redevances, comme, par exemple, les copies réalisées à des fins de test, le groupe de tables spécifiques COPY_LOG comprend également un argument (CLO_TYPE) permettant d'identifier le type de la copie.

Le groupe de tables spécifiques CLT_CATEGORY appartient au cinquième ensemble de tableaux (1105, fig. 3A et 3B) et permet d'associer une chanson à au moins une catégorie définie dans le groupe de tables spécifiques CATEGORY.

Le groupe de tables spécifiques EVENT appartient au dixième ensemble de tableaux (1110, fig. 3F) et permet de regrouper des instructions (définies ultérieurement) de sorte qu'elles soient exécutées à un instant déterminé défini dans le groupe de tables spécifiques EVENT_DEF.

Le groupe de tables spécifiques EXECUTED_INSTRUCTION appartient au dixième ensemble de tableaux (1110, fig. 3F) et permet d'archiver une instruction lorsque celle-ci a été réalisée sur le juke-box concerné.

Le groupe de tables spécifiques FILE_RECEPTION, fig 3E contient tous les fichiers textes reçus des juke-box lors d'une communication entre le serveur et les juke-box.

Le groupe de tables spécifiques FIRMWARE appartient au deuxième ensemble de tableaux (1102, fig. 3B et 3D) et permet d'associer un composant matériel décrit dans le groupe de tables COMPONENT et un logiciel décrit dans le groupe de tables PROGRAM destinés à fonctionner avec le composant.

Le groupe de tables spécifiques FLT_ARTIST appartient au sixième ensemble de tableaux (1106, fig. 3B) et contient une définition des filtres portant sur des artistes mis en place sur des juke-box. Ces filtres sont consultés chaque fois qu'une chanson doit être téléchargée sur un juke-box, de sorte qu'une chanson ayant un artiste appartenant à un filtre ne soit pas téléchargée sur le juke-box concerné par le filtre. Chaque table de ce groupe de table correspond à un filtre déterminé (JUF_ID) et un artiste déterminé (ART_ID).

Le groupe de tables spécifiques FLT_CATALOGUE, fig. 3B, similaire au précédent mais le filtre porte ici sur une chanson.

Le groupe de tables spécifiques FLT_CATEGORY, fig. 3B, similaire au précédent mais le filtre porte ici sur une catégorie de chansons.

Le groupe de tables spécifiques FLT_LABEL, fig. 3B, similaire au précédent mais le filtre porte ici sur une maison de disques (label).

Le groupe de tables spécifiques IBUTTON_INDEX, fig. 3F établit un lien entre l'identification d'un élément du Ibutton (défini précédemment) et l'identification du même élément dans la base de données.

Le groupe de tables spécifiques IB_CREDIT appartient au troisième ensemble de tableaux (1103, fig. 3A et 3C) et contient les informations relatives aux crédits gratuits utilisables sur un juke-box, cette information étant contenue dans le Ibutton des juke-box. Un crédit représente la somme d'argent nécessaire à acquitter pour permettre la reproduction d'une chanson sur un juke-box. Ces informations permettent de déterminer, notamment combien de crédits sont disponibles, quel est le nombre de crédits maximums disponibles. Chaque table de ce groupe de tables correspond à un type de crédit particulier.

Le groupe de tables spécifiques IB_ISP appartient au troisième ensemble de tableaux (1103, fig. 3A et 3C) et contient les informations nécessaires pour permettre la connexion à Internet, cette information étant contenue dans le Ibutton des juke-box. Chaque table de ce groupe de tables contient notamment les paramètres de connexion (ISP_SEVEUR-IP_ADRESS,..), le nom de l'utilisateur (ISP_LOGIN_NAME), le mot de passe (ISP_PASSWORD), et le numéro de téléphone du fournisseur d'accès (en anglais Internet Service Provider: ISP) (ISP_PHONE_NO). Chaque table correspond à une connexion déterminée avec un fournisseur d'accès déterminé.

Le groupe de tables spécifiques IB_MIXAGE appartient au troisième ensemble de tableaux (1103, fig. 3A et 3C) et contient toutes les informations relatives aux réglages du son sur un juke-box, cette information étant contenue dans le Ibutton des juke-box. Une table de ce groupe de tables correspond à un réglage déterminé du son.

Le groupe de tables spécifiques IB_OHTER_SETTING appartient au troisième ensemble de tableaux (1103, fig. 3A et 3B) et contient toutes les informations relatives au paramétrage des juke-box et contenu dans le Ibutton. Chaque table de ce groupe de tables comprend notamment la langue du juke-box (SET_LANGUAGE), la disponibilité de la ligne téléphonique (SET_LINE_AVAIL_STRAT_TIME, SET_LINE_AVAIL_END_TIME) et la version du Ibutton (SET_IB_VERSION). Chaque table correspond à un jeu de paramètres déterminés.

Le groupe de tables spécifiques IB_PASSWORD appartient au troisième ensemble de tableaux (1103, fig. 3A et 3B) et contient les mots de passe affectés à un juke-box pour que celui-ci puisse fonctionner.

Le groupe de tables spécifiques IB_REMOTE_CONTROL appartient au troisième ensemble de tableaux (1103, fig. 3A et 3B) et contient les paramètres de configuration d'une télécommande utilisable pour faire fonctionner un juke-box. Ces paramètres correspondent à ceux mémorisés dans le Ibutton d'un juke-box.

Le groupe de tables spécifiques IB_TUNE-COST appartient au troisième ensemble de tableaux (1103, fig. 3A et 3B) et contient la configuration des prix à acquitter sur un juke-box pour pouvoir sélectionner une ou plusieurs chansons.

Tous les groupes de tables IB_XXX contiennent en fait toutes les configurations possibles d'un juke-box gérées par le système selon l'invention. L'affectation d'une configuration particulière, c'est-à-dire d'une table spécifique d'un groupe de tables IB_XXX à un juke-box déterminé (JUK_ID) s'effectue par l'intermédiaire d'un autre groupe de tables spécifiques JUK_XXX (décrit ultérieurement).

Le groupe de tables spécifiques INSTRUCTION appartient au dixième ensemble de tableaux (1110, fig. 3F) et comprend toutes les instructions qui doivent être transmises à un juke-box. Chaque instruction est définie par un numéro (INS_ID) et le juke-box destinataire est identifié par son numéro (JUK_ID). Chaque table de ce groupe de tables correspond à une instruction devant être envoyée à un juke-box. Chaque table permet également de déterminer le type d'instruction par l'intermédiaire d'un code (INS_CODE). Chaque table comprend également la date (INS_TARGET_DT) à partir de laquelle le serveur (10) peut transmettre les instructions au juke-box. Ainsi, il est possible de préparer et de mémoriser les instructions destinées au juke-box à l'avance.

Le groupe de tables spécifiques INS_DEF appartient au dixième ensemble de tableaux (1110, fig. 3F) et comprend une description de tous les types d'instructions. La liaison entre ce groupe de tables et le groupe de tables spécifiques INSTRUCTION est réalisée par le code de l'instruction INS_CODE.

Le groupe de tables spécifiques INS_ALBUM appartient au dixième ensemble de tableaux (1110, fig. 3F) et comprend les instructions relatives à l'ajout, la modification ou la suppression d'un album. Chaque table comprend un argument (IAL_EXECUTION_DT) permettant de s'assurer que l'instruction correspondant à la table a été exécutée dans son ensemble.

Le groupe de tables spécifiques INS_CATALOGUE, fig. 3F, similaire au groupe de tables spécifiques précédant, mais dont les instructions concernent une chanson.

Le groupe de tables spécifiques INS_IBUTTON, fig. 3F, similaire au groupe de tables spécifiques précédant, mais dont les instructions concernent la modification d'un paramètre mémorisé dans le Ibutton.

Le groupe de tables spécifiques INS_SOFTWARE, fig. 3F, similaire au groupe de tables spécifiques précédant, mais dont les instructions concernent un logiciel.

Le groupe de tables spécifiques INS_JEEP_SCRIPT appartient au dixième ensemble de tableaux (1110, fig. 3F) et comprend les instructions relatives à l'exécution d'une commande sur un juke-box. Une commande peut constituer, en déplacer, renommer, ou supprimer un fichier sur le juke-box.

Le groupe de tables spécifiques JUKEBOX appartient au premier ensemble de tableaux (1101, fig. 2, 3A et 3E) et comprend les informations relatives à l'installation d'un juke-box. Chaque table de ce groupe de table comprend notamment un numéro d'identification du juke-box (JUK_ID), sa date de mise en service (JUK-INSTALLATION_DT), son statut (JUK_STATUT) etc... Chaque table correspond à la description d'un juke-box du réseau.

Le groupe de tables spécifiques JUKEBOX_REPORT appartient au neuvième ensemble de tableaux (1109, fig. 3F) et comprend des informations permettant d'établir la facturation de l'opérateur par une consultation des arguments (JUK_SLEEP_MODE_FLAG, JUK_SLEEP_MODE_DT) du groupe de tables JUKEBOX définissant les périodes d'inutilisation du juke-box.

Le groupe de tables spécifiques JUKEBOX_DAY_REPORT appartient au neuvième ensemble de tableaux (1109, fig. 3F) et contient sensiblement les mêmes informations que le groupe de tables spécifiques JUKEBOX_REPORT, mais regroupées par jour alors que dans le groupe de tables spécifiques JUKEBOX_REPORT chaque transaction du juke-box est archivée.

Le groupe de tables spécifiques JUKEBOX_DOWNLOAD appartient au neuvième ensemble de tableaux (1109, fig. 3F) et permet d'archiver toutes les copies de chansons qui sont intervenues sur les juke-box.

Le groupe de tables spécifiques JUKEBOX_LOCATION appartient au septième ensemble de tableaux (1107, fig. 3A) et contient les informations relatives au lieu d'implantation du juke-box et à la société locataire du juke-box.

Le groupe de tables spécifiques JUK_CONNECTION permet d'archiver toutes les dates de début et de fin de communication entre un juke-box et le serveur.

Le groupe de tables spécifiques JUK_CREDIT appartient au deuxième ensemble de tableaux (1102, fig. 3A et 3B) et permet de faire le lien avec le groupe de tables spécifiques IB_CREDIT pour associer l'attribution des crédits à un juke-box particulier (JUK_ID). Ce groupe de tables permet également d'archiver les différentes configurations des crédits qui ont été validées sur un juke-box, mais qui ne sont plus autorisées. En effet, la configuration en cours de validité pour un juke-box déterminé (JUK_ID) est contenue dans la table spécifique pour laquelle la date (JCR_START_DT) est la plus récente. Les autres tables sont conservées comme archives.

Le groupe de tables spécifiques JUK_FILTER appartient au sixième ensemble de tableaux (1106, fig. 3B) et contient les descriptions de tous les filtres qui sont mis en place sur les juke-box. Chaque table de ce groupe de tables correspond à un filtre identifié par un numéro unique (JUF_ID).

Le groupe de tables spécifiques JUK_ISP appartient au deuxième ensemble de tableaux (1102, fig. 3A et 3C) et permet de faire le lien avec le groupe de tables spécifiques IB_ISP pour configurer la connexion d'un juke-box particulier (JUKE_ID). Ce groupe de table permet également d'archiver les différentes configurations de connexion qui ont été validées sur un juke-box, mais qui ne sont plus autorisées. En effet, la configuration en cours de validité pour un juke-box déterminé (JUK_ID) est contenue dans la table spécifique pour laquelle la date (JIS_START_DT) est la plus récente. Les autres tables sont conservées comme archives.

Le groupe de tables spécifiques JUK_MIXAGE appartient au deuxième ensemble de tableaux (1102, fig. 3A et 3C) et permet de faire le lien entre le groupe de tables spécifiques IB_MIXAGE et le paramétrage du son d'un juke-box particulier (JUK_ID). Ce groupe de tables permet également d'archiver les différentes configurations de son qui ont été validées sur un juke-box, mais qui ne sont plus autorisées. En effet, la configuration en cours de validité pour un juke-box déterminé (JUK_ID) est contenue dans la table spécifique pour laquelle la date (JMI_START_DT) est la plus récente. Les autres tables sont conservées comme archives.

Le groupe de tables spécifiques JUK_OTHER_SETTING appartient au deuxième ensemble de tableaux (1102, fig. 3A et 3C) et permet de faire le lien entre le groupe de tables spécifiques IB_OTHER_SETTING et le paramétrage d'un juke-box. Ce groupe de tables permet également d'archiver les différentes configurations qui ont été validées sur un juke-box, mais qui ne sont plus autorisées. En effet, la configuration en cours de validité pour un juke-box déterminé (JUK_ID) est contenue dans la table spécifique pour laquelle la date (JOT_START_DT) est la plus récente. Les autres tables sont conservées comme archives.

Le groupe de tables spécifiques JUK_PASSWORD appartient au deuxième ensemble de tableaux (1102, fig. 3A et 3C) et permet de faire le lien entre le groupe de tables spécifiques IB_PASSWORD et un juke-box. Chaque table de ce groupe de tables permet d'affecter un jeu de mots de passe à un juke-box déterminé par son numéro (JUK_ID). Ce groupe de tables permet également d'archiver les différents jeux de mots de passe qui ont été validés sur un juke-box, mais qui ne sont plus autorisés. En effet, la configuration en cours de validité pour un juke-box déterminé (JUK_ID) est contenue dans la table spécifique pour laquelle la date (JPW_START_DT) est la plus récente. Les autres tables sont conservées comme archives.

Le groupe de tables spécifiques JUK_PRICING appartient au onzième ensemble de tableaux (1111, fig. 2 et 3B) et permet de faire le lien entre un tableau PRICING (décrit ultérieurement) et un juke-box déterminé par son numéro (JUK_ID). Chaque table de ce groupe de tables permet d'affecter une période de promotion définie dans le groupe de tables spécifiques PRINCING à un juke-box déterminé par son identifiant (JUK_ID).

Le groupe de tables spécifiques JUK_PROMOTION appartient au onzième ensemble de tableaux (1111, fig. 2 et 3B) et permet de faire le lien entre le groupe de tables spécifiques PROMOTION (décrit ultérieurement) et un juke-box. Chaque table de ce groupe de tables permet d'affecter une promotion particulière (PROD-ID) à un juke-box déterminée par son identifiant (JUK-ID).

Le groupe de tables spécifiques JUK_REMOTE_CONTROL appartient au deuxième ensemble de tableaux (1102, fig. 3B) et permet de faire le lien entre le groupe de tables spécifiques IB_REMOTE_CONTROL et un juke-box. Chaque table de ce groupe de tables permet d'affecter une configuration particulière (REM_ID) à une commande à distance d'un juke-box déterminé par son numéro (JUK_ID). Ce groupe de tables permet également d'archiver les différentes configurations de la commande à distance qui ont été validées sur un juke-box, mais qui ne sont plus autorisées.

Le groupe de tables spécifiques JUK_TUNE_COST appartient au deuxième ensemble de tableaux (1102, fig. 3A et 3B) et permet de faire le lien entre le groupe de tables spécifiques IB_TUNE_COST et un juke-box. Ce tableau permet d'affecter un choix de prix de chansons particulier, (COS_ID) à un juke-box déterminé par son numéro (JUK_ID). Ce tableau permet également d'archiver les différents choix de prix qui ont été validés sur un juke-box mais qui ne sont plus autorisées. En effet, la configuration en cours de validité pour un juke-box déterminé (JUK_ID) est contenue dans la table spécifique pour laquelle la date (JRM_START_DT) est la plus récente. Les autres tables sont conservées comme archives.

Le groupe de tables spécifiques LABEL appartient au cinquième ensemble de tableaux (1105, fig. 3A et 3B) et décrit toutes les maisons de disques contenues dans la base de données. Chaque table de ce groupe de tables contient notamment l'identifiant de l'adresse de la maison de disque (ADR_ID), l'adresse complète étant stockée dans le groupe de tables spécifiques ADDRESS, un numéro d'identification (LAB_ID), le nom de la maison de disque. Chaque table correspond à une maison de disques.

Le groupe de tables spécifiques LABEL_ROYALTY appartient au neuvième ensemble de tableaux (1109, fig. 3F) et contient les informations nécessaires pour le calcul des redevances payables aux maisons de disques. Chaque table de groupe de tables est liée notamment au tableau PLAY_LOG (décrit ultérieurement) qui mémorise toutes les diffusions de chansons survenant sur les juke-box. La liaison est effectuée par le numéro d'identification du juke-box.

Le groupe de tables spécifiques LOGIN_SCRIPT appartient au deuxième ensemble de tableaux (1102, fig. 3B et 3D) et contient les scripts de démarrage associés aux fournisseurs d'accès Internet.

Le groupe de tables spécifiques LOG_RECEPTION appartient au huitième ensemble de tableaux (1108, fig. 3A et 3E) et permet d'archiver tous les fichiers de compte rendu (log file) des juke-box reçus par le serveur. Chaque table de ce groupe de tables contient, notamment, le numéro du juke-box (JUK-ID) émetteur du fichier de compte rendu, la date de réception (LOR_RECEIVE_DT), et le fichier transmis (LOR_FILE).

Le groupe de tables spécifiques MASTER appartient au cinquième ensemble de tableaux (1105, fig. 3A et 3B) et définit des listes d'environ 750 chansons appartenant à un même style qui peuvent constituer le point de départ d'une liste de chansons disponibles sur un juke-box. Chaque table de groupe de tables comprend notamment un numéro d'identification (MAS_ID) de chaque liste, une description de la liste (MAS_DESC) et le type de la liste (MAS_TYPE). Le nom des chansons, constituant la liste identifiée dans le groupe de tables spécifiques MASTER, est contenu dans le groupe de tables spécifiques MASTER_CATALOGUE.

Le groupe de tables spécifiques MODEM_STRING, fig. 3E contient des chaînes de textes nécessaires à l'initialisation des modems des juke-box. Ce tableau est lié au groupe de tables IB_OTHER_STTING contenant les configurations des juke-box et notamment la configuration du modem.

Le groupe de tables spécifiques OPERATOR appartient au septième ensemble de tableaux (1107, fig. 3A et 3F) et contient toutes les informations de tous les opérateurs possédant un juke-box, géré par le dispositif selon l'invention. Un opérateur est un utilisateur qui loue un ou plusieurs juke-box. Chaque groupe de tables contient notamment, un identifiant (OPE_ID) unique pour chaque opérateur et le nom (OPE_NAME) de chaque opérateur. Chaque table contient également une configuration par défaut que chaque opérateur souhaite établir sur les juke-box qu'il loue. La configuration par défaut est identifiée par des identifiants (COS_ID, REM_ID, CRE_ID, ISP_ID, SET_ID, MIX_ID) permettant de lier chaque table aux différentes tables des groupes de tables de configuration (IB_TUNE_COST, IB_REMOTE_CONTROL, IB_CREDIT, IB_ISP, IB_OTHER_SETING, IN_MIXAGE) définis précédemment.

Le groupe de tables spécifiques OPERATOR_INVOICE appartient au neuvième ensemble de tableaux (1109, fig. 3F) et contient l'en-tête des factures envoyées à un opérateur.

Le groupe de tables spécifiques OPERATOR-INVOICE_DETAIL appartient au neuvième ensemble de tableaux (1109, fig. 3F) et contient le détail des factures envoyées à un opérateur.

Le groupe de tables spécifiques ODERING, fig. 3A contient toutes les chansons commandées par un opérateur via un juke-box, ou via une communication directe avec le serveur. Chaque table de ce groupe de tables correspond à une chanson commandée (CLT_ID). Dès que la chanson est envoyée vers le juke-box, la table correspondante à la chanson envoyée est effacée par le serveur (10).

Le groupe de tables spécifiques PACKAGE appartient au deuxième ensemble de tableaux (1102, fig. 3B et 3D) et contient des informations relatives à des regroupements de programmes installés sur les juke-box. La constitution de ces regroupements est contenue dans le groupe de tables spécifiques PACKAGE_DEF.

Le groupe de tables spécifiques PHONE, fig. 3A contient tous les numéros de téléphone utiles à la gestion des juke-box. Chaque table de ce groupe de tables comprend, le numéro de téléphone (PHO_NUMBER), l'identification du titulaire du numéro (PHO_OBJECT_SOURCE), l'identifiant du tableau contenant les informations relatives au titulaire (PHO_OBJECT_ID), le genre de la ligne correspondant au numéro (PHO_TYPE) c'est-à-dire si le numéro est un numéro de téléphone fixe, de fax, ou de téléphone portable.

Le groupe de tables spécifiques PLAY_LOG appartient au huitième ensemble de tableaux (1108, fig. 3A et 3E) et permet d'archiver toutes les diffusions des chansons sur les juke-box. Les tables de ce groupe de tables sont mises à jour chaque fois qu'un juke-box envoie un fichier de compte rendu au serveur. Chaque table correspond à la diffusion d'une chanson.

Le groupe de tables spécifiques PROGRAM appartient au deuxième ensemble de tableaux (1102, fig. 3B et 3E) et contient toutes les versions de tous les programmes utilisés. Chaque table de ce groupe de tables contient notamment le nom (PGD_NAM), et la version (PGM_VERSION) du programme mais également le programme lui-même (PGM_CODE_SOURCE). Chaque table correspond à la version d'un programme. Les programmes conçus pour fonctionner sur les juke-box sont décrits dans le groupe de tables spécifiques PROGRAM_DEF.

Le groupe de tables spécifiques PROGRAM_INCOMPT appartient au deuxième ensemble de tableaux (1102, fig. 3B et 3E) et recense toutes les incompatibilités existantes entre des versions de certains programmes.

Le groupe de tables spécifiques PROMOTION appartient au onzième ensemble de tableaux (1111, fig. 3B) et permet de décrire des promotions susceptibles d'intervenir sur un juke-box. On entend par promotion, par exemple, une réduction du coût ou une gratuité d'une ou plusieurs chansons déterminées. Les chansons concernées par la promotion sont listées dans le groupe de tables spécifiques PRO_PACKAGE_CATALOGUE. La promotion peut s'étendre à toutes les chansons d'un artiste déterminé. Dans ce cas, les identifiants des artistes (ART_ID) concernés par la promotion sont contenus dans le groupe de tables spécifiques PRO_PACKAGE_ARTIST. De même, une promotion peut regrouper à la fois des promotions sur des chansons déterminées ou sur toutes les chansons d'un artiste, dans ce cas un tableau PRO_PACKAGE contient un argument permettant de lier les tables PRO_PACKAGE_ARTIST et PRO_PACKAGE_CATALOGUE aux tables PROMOTION. De même, un groupe de tables PRO_PRICING comprend également un argument permettant de lier le groupe de tables spécifiques PROMOTION avec le groupe de tables spécifiques PRICING contenant une définition précise des périodes pendant lesquelles la promotion est validée.

Le groupe de tables spécifiques PUBLISHER_ROYALTY appartient au neuvième ensemble de tableaux (1109, fig. 3F) et contient toutes les informations relatives au paiement des redevances aux éditeurs des chansons diffusées ou copiées sur un juke-box.

Le groupe de tables spécifiques REPLACEMENT_PROGRAM appartient au neuvième ensemble de tableaux (1102, fig. 3B et 3D) et permet d'indiquer qu'un programme (PGD_NAME) est remplacé par un autre programme (REP_PGD_NAME) à partir d'une date déterminée (REP_START_DT).

Le groupe de tables spécifiques SOFTWARE appartient au deuxième ensemble de tableaux (1102, fig. 3B et 3D) et permet de faire le lien entre un programme et un juke-box sur lequel est installé le programme. Chaque table de ce groupe de tables permet d'affecter un programme (PGD_NAME) à un juke-box déterminé par son numéro (JUK_ID). Chaque table permet également d'archiver les différentes installations de programmes qui ont été validées sur un juke-box, mais qui ne sont plus autorisées. En effet, la configuration en cours de validité pour un juke-box déterminé (JUK_ID) est contenue dans la table spécifique pour laquelle la date (SOF_START_DT) est la plus récente. Les autres tables sont conservées comme archives.

Le groupe de tables spécifiques SONG appartient au quatrième ensemble de tableaux (1104, fig. 2 et 3A) et permet de faire le lien entre des chansons et un juke-box sur lequel sont installées les chansons. Chaque table de ce groupe de tables permet d'affecter une chanson (CLT_ID) à un juke-box déterminé par son numéro (JUK_ID). Ce groupe de tables permet ainsi de connaître la liste des chansons disponibles sur un juke-box. Chaque table comprend également un argument (MAS_ID) permettant de déterminer si une chanson du juke-box fait partie des chansons disponibles dès l'installation du juke-box ou si la chanson a été ultérieurement commandée par l'opérateur du juke-box. Ce groupe de tables permet également d'archiver les différentes chansons qui ont été installées sur un juke-box puis effacées. En effet, chaque table comprend un argument (SON_END_DT) indiquant la date à laquelle la chanson déterminée par son identifiant (CLT_ID) a été supprimée de la liste des chansons disponibles du juke-box déterminé par son identifiant (JUK_ID).

Le groupe de tables spécifiques SYSTEM_LOG appartient au huitième ensemble de tableaux (1108, fig. 3A et 3E) et contient toutes les informations transmises par les juke-box dans les fichiers de compte rendu, hormis les informations concernant les diffusions de chansons qui sont contenues dans le groupe de tables spécifiques PLAY_LOG.

Le groupe de tables spécifiques WAREHOUSE appartient au septième ensemble de tableaux (1107, fig. 3A) et permet d'affecter un ou plusieurs juke-box à une entreprise d'un opérateur. En effet, un opérateur peut posséder plusieurs entreprises. Il est donc plus simple, pour la gestion des juke-box loués par cet opérateur, d'affecter chaque juke-box à une entreprise.

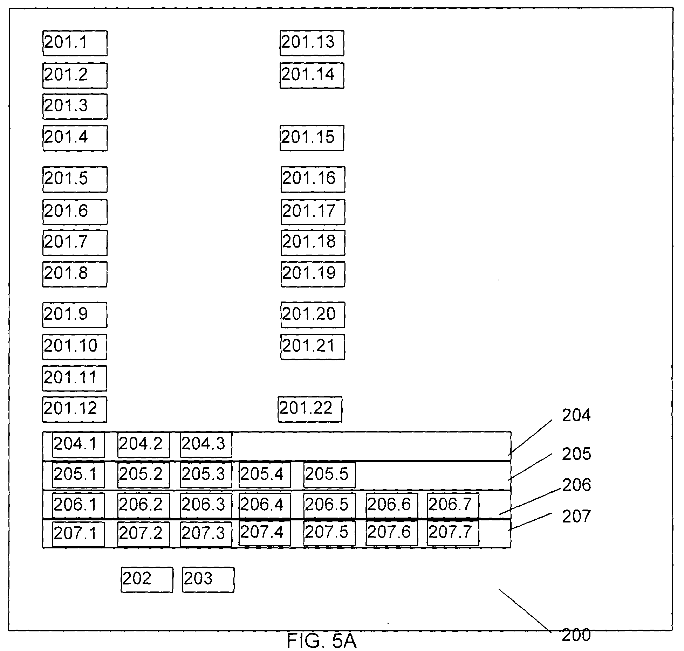

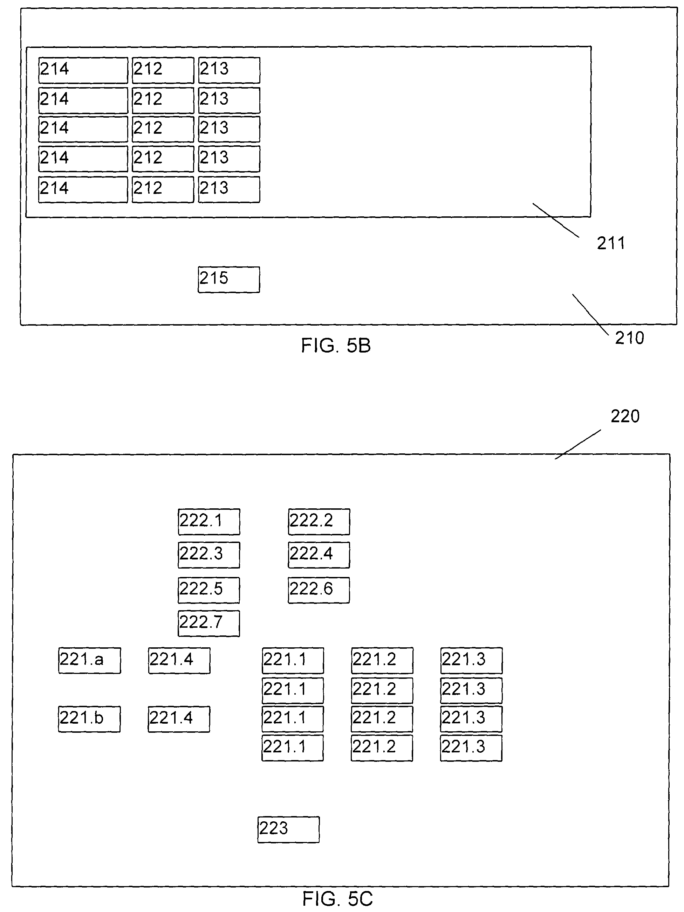

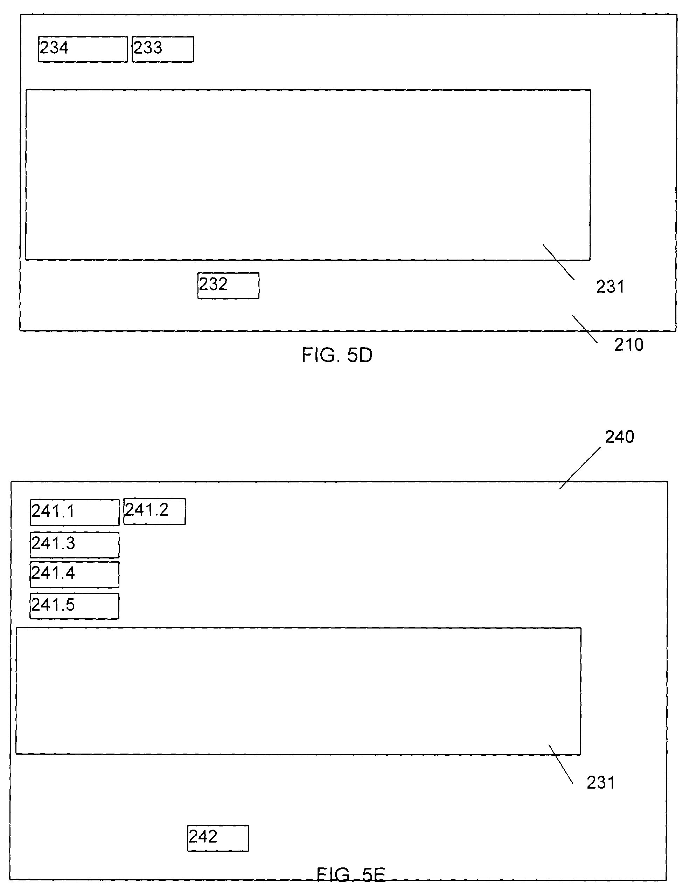

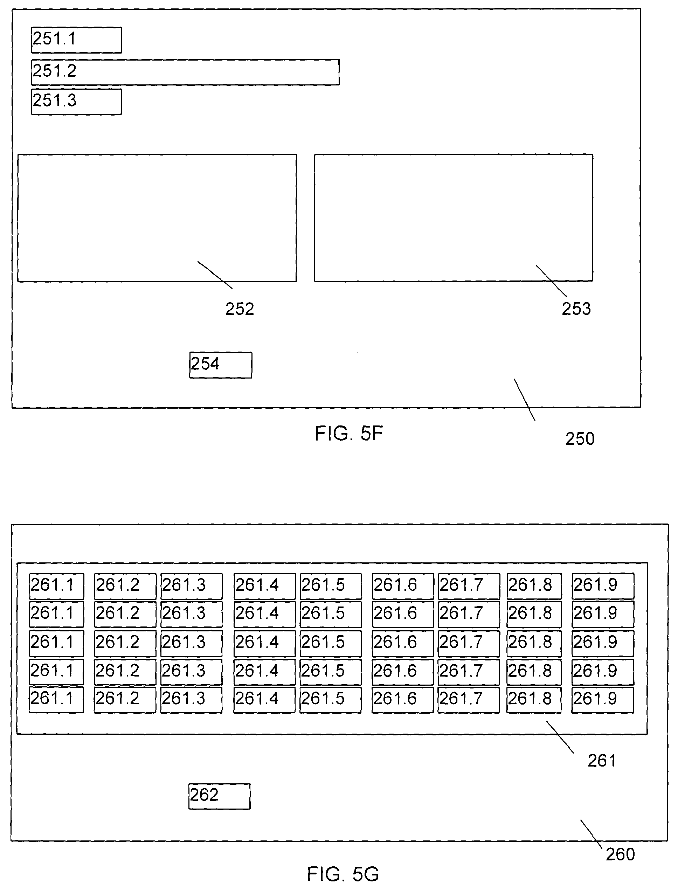

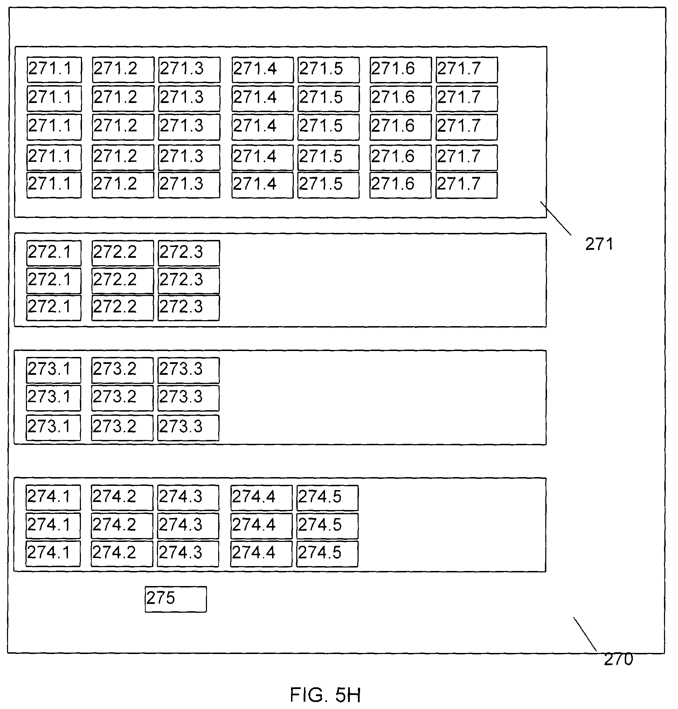

Les figures 5A à 5H représentent différentes fenêtres permettant de visualiser les informations des tableaux de la base de données. Afin de manipuler de façon plus simple, les informations contenues dans les ensembles de tableaux de la base de données du système selon l'invention, le serveur comprend un module de présentation constituant une interface utilisateur. Ce module permet non seulement de présenter de manière conviviale les informations de la base de données mais également de collecter de manière sélective ces informations de sorte que même du serveur l'utilisateur ne possédant pas de connaissances de l'architecture de la base de données puisse avoir accès à certaines informations. De plus, ce module permet également de modifier, ajouter ou supprimer des informations de la base de données.

Ce module permet essentiellement la visualisation sur un moniteur d'une pluralité d'écran ou fenêtre comprenant chacun, soit des zones d'affichage d'informations, soit des zones de saisie d'informations, soit des zones ou boutons de sélection. Les zones de sélection sont, en général, liées à des procédures provoquant notamment, la collecte d'informations et leur stockage dans la base de données ou la validation des informations saisies dans les zones de saisie.

Un premier écran (200) représenté figure 5A, est destiné à visualiser ou manipuler toutes les informations relatives à un juke-box. Cet écran (200) comprend une pluralité de zones (201.1 à 201.22) pouvant être des zones d'affichage ou des zones de saisie. Chacune de ces zones (201.1 à 201.22) correspond à un argument du tableau JUKE-BOX, fig. 3A. Lorsqu'un utilisateur souhaite consulter les informations relatives à un juke-box existant, il suffit de saisir le numéro d'identification du juke-box souhaité dans une première zone (201.1) de saisie et de valider cette saisie en sélectionnant une première zone (202) de sélection. Cette sélection déclenche une recherche dans le groupe de tables spécifiques JUKEBOX, fig. 3A de la base de données parmi toutes les valeurs des arguments, celles dont le numéro d'identification correspond à celui saisi. Une fois collectées, ces informations sont affichées dont des zones (201.2 à 201.22) d'affichage correspondantes. Lorsque l'utilisateur souhaite créer un nouveau juke-box, il suffit de saisir dans la première zone (201.1) correspondant au numéro d'identification, un numéro qui n'est pas encore utilisé, puis de valider ce choix en sélectionnant une deuxième zone (203) de sauvegarde. Cette sauvegarde déclenche la création d'une nouvelle table dans le groupe de tables spécifiques JUKEBOX, fig. 3A, et la génération d'un mot de passe nécessaire pour le fonctionnement du nouveau juke-box qui est affiché dans la zone (201.2) d'affichage correspondant. Hormis les zones (201.1, 201.2) d'affichage correspondant au numéro de juke-box et au mot de passe, les autres zones (201. 3 à 201.22) de saisie sont vierges. Le premier tableau (200) comprend également une pluralité de séries de boutons (204 à 207) de sélection provoquant chacun l'affichage d'un nouvel écran. Ces nouveaux écrans permettent de visualiser les informations sur la constitution, la mise à jour, ou le fonctionnement du juke-box identifié par le numéro saisi dans la zone (201.1) correspondante du premier écran (200).

Une première série (204) de boutons permet de configurer un juke-box avec les paramètres par défaut définis préalablement. La sélection d'un premier bouton (204.1) provoque l'initialisation du I-button du juke-box correspondant au numéro saisi ou affiché dans la première zone (201.1), ainsi, cette opération permet d'affecter pour chaque paramètre de fonctionnement du juke-box une valeur par défaut. Un deuxième bouton (204.2) affiche un écran (non représenté) permettant d'affecter au juke-box une liste prédéfinie de chanson qui seront ensuite installées sur le juke-box pour constituer la liste des chansons disponibles sur le juke-box. Un troisième bouton (204.3) affiche un écran (non représenté) permettant d'affecter au juke-box une liste prédéfinie de programmes qui seront utilisés pour faire fonctionner le juke-box.

Une deuxième série (205) de boutons permet d'afficher la description des éléments constitutifs du juke-box. Un premier bouton (205.1) provoque l'affichage d'un écran (non représenté) comprenant une pluralité de champs utilisés pour afficher les informations relatives à l'opérateur. Ces informations sont collectées dans le groupe de tables OPERATOR , fig. 3A pour l'identifiant de l'opérateur locataire ou propriétaire du juke-box. Un deuxième bouton (205.2) provoque l'affichage d'un écran (non représenté) comprenant une pluralité de champs utilisés pour afficher les informations relatives aux programmes installés sur le juke-box. Ces informations sont collectées dans le groupe de tables SOFTWARE, fig. 3B et dans le groupe de tables PROGRAM_DEF, fig. 3D. Un troisième bouton (205.3) provoque l'affichage d'un écran (non représenté) comprenant une pluralité de champs utilisés pour afficher les informations relatives aux composants matériels installés sur le juke-box. Ces informations sont collectées, dans le groupe de tables COMPONENT, fig. 3B et dans le groupe de tables COMPONENT_DEF, fig. 3B. Un quatrième bouton (205.4) provoque l'affichage d'un écran (non représenté) comprenant une pluralité de champs utilisés pour afficher la liste des chansons actuellement commandées pour le juke-box. Ces informations sont collectées, dans le groupe de tables ORDERING, fig. 3A. Un cinquième bouton (205.5) provoque l'affichage d'un deuxième écran, représenté figure 5B. L'affichage de cette écran est précédé d'une collecte d'informations dans les tableaux SONG, fig. 3A et CATALOGUE, fig. 3B pour afficher dans une fenêtre déroulante (211) du deuxième écran (210), la liste des chansons disponibles sur le juke-box désigné par son identifiant. Les chansons sont identifiées par leur numéro (212) et leur titre (213). Le numéro de toutes les chansons est collecté dans le groupe de tables spécifiques SONG et pour chaque chanson du juke-box le serveur comporte des moyens d'afficher la date d'achat, la date de livraison, le temps de transfert, la date de suppression de la chanson, et le titre de la chanson, ces éléments étant collectés dans les tables spécifiques CATALOGUE. Ce deuxième écran (210) est uniquement destiné à la consultation, il ne comprend pas de zone de saisie.

Une troisième série (206) de boutons permet de provoquer l'affichage d'écran permettant de consulter les paramètres de fonctionnement du juke-box. Chaque bouton (206.1 à 206.7) correspond en fait à l'affichage des paramètres identifiés dans chaque table des groupes de tables JUK_PASSWORD, JUK_TUNE_COST, JUK_REMOTE_CONTROL, JUK_MIXAGE, JUK_ISP, JUK_CREDIT, JUK_OTHER_SETTING, fig. 3A et 3C, dont l'argument identifiant le juke-box correspond à l'identifiant affiché dans le premier zone (201.1) d'affichage du premier écran (200, fig. 5A). Ainsi, la sélection d'un des boutons (206.1 à 206.7) déclenche dans un premier temps une collecte d'informations dans le groupe de tables JUK_AAA correspondant au bouton, pour trouver la table dont le numéro d'identifiant de juke-box correspond au numéro souhaité. Puis une collecte d'information dans la table IB_AAA du groupe de table associé à la table JUK_AAA est réalisée pour déterminer la valeur des paramètres correspondant à l'identifiant du jeu de paramètre trouvé dans la table du groupe de tables JUK_AAA. A titre d'exemple non limitatif, la sélection d'un premier bouton (206.1) de sélection de la troisième série déclenche une collecte d'informations dans les tableaux JUK_MIXAGE, fig. 3A et IB_MIXAGE, fig. 3A pour afficher dans un troisième écran (220) les paramètres de réglage du son sur le juke-box choisi dans le premier écran. Ce troisième écran (220) est uniquement destiné à la consultation, il ne comprend pas de zone de saisie. Les différents paramètres de volume maximum (221.4) volume (221.1), basse (221.2), aiguë (221.3), pour la voie de droite et la voie de gauche réglage du son pour chaque zone (221a, 221b) sont affichés dans des zones (221) d'affichage. Des zones d'affichage permettent de visualiser les paramètres de volume pour chacun des dispositifs suivants, un microphone (222.1), une source auxiliaire (222.2), une musique de fond (222.3).

Une quatrième série (207) du boutons de sélection permet l'affichage d'écran permettant de gérer les juke-box et notamment les communications entre le serveur et les juke-box. Un premier bouton (207.1) provoque la collecte d'informations par le serveur dans les groupes de tables INSTRUCTION, fig. 3F, INSTRUCTION_DEF, et INS_XXX, pour afficher dans un quatrième écran (230) la liste des instructions qui doivent être envoyées vers le juke-box sélectionné dans le premier écran (200), et affiché dans une première zone (234) d'affichage. Ce quatrième écran (230) comprend donc une zone (231) qui permet à la fois de visualiser les instructions déjà prévues, ou de modifier ces instructions ou encore d'ajouter de nouvelles instructions. Le quatrième écran (230) comprend un bouton de sauvegarde (232) permettant de valider les instructions saisies ou modifiées dans la zone (231) de saisie jusqu'à la date d'envoi déterminée. Cette validation provoque également la mise à jour des groupes de tables INSTRUCTION, INSTRUCTION_DEF, et INS_XXX.

Un deuxième bouton (207.2) provoque, après collecte d'informations dans le groupe de tables PLAY_LOG, fig. 3A, l'affichage d'un écran visualisant, par exemple l'historique de toutes les chansons jouées sur le juke-box identifié par le numéro d'identifiant affiché dans la première zone (201.1) du premier écran (200). Un troisième bouton (207.3) provoque, après collecte d'informations dans le groupe de tables SYSTEM_LOG, fig. 3A, l'affichage d'un écran visualisant, par exemple l'historique de toutes les actions exécutées sur le juke-box identifié par le numéro d'identifiant affiché dans la première zone (201.1) du premier écran (200). Ces actions sont, par exemple, l'introduction successive d'une somme d'argent dans le monnayeur du juke-box. Un quatrième bouton (207.4) provoque, après collecte d'informations dans le groupe de tables COMMAND, l'affichage d'un écran visualisant, par exemple l'historique de toutes les commandes qui vont être exécutées sur le juke-box identifié par le numéro d'identifiant affiché dans la première zone (201.1) du premier écran (200). Un cinquième bouton (207.5) provoque, après collecte d'informations dans un groupe de tables JUK_CONNECTION, l'affichage d'un écran visualisant, toutes les connexions établies entre le serveur et le juke-box identifié par le numéro d'identifiant affiché dans la première zone (201.1) du premier écran (200) lors de la connexion de ce dernier avec le serveur. Un sixième bouton (207.6) provoque, après collecte d'informations dans le groupe de tables LOG_RECEPTION, fig. 3E, l'affichage d'un écran visualisant l'historique de tous les fichier de compte rendu reçus par le serveur et envoyés par le juke-box identifié par le numéro d'identifiant affiché dans la première zone (201.1) du premier écran (200). Un septième bouton (207.7) provoque, après collecte d'informations dans le groupe de tables EXECUTED_INSTRUCTION, fig. 3F, l'affichage d'un écran visualisant, l'historique de toutes les instructions exécutées sur le juke-box identifié par le numéro d'identifiant affiché dans la première zone (201.1) du premier écran (200).

Un cinquième écran (240) permet de maintenir à jour la banque de chansons contenue dans la base de données. Cet écran (240) permet notamment d'ajouter des albums ou de modifier les données de la banque de chansons, notamment lorsque les droits de diffusion sont obtenus et/ou lorsque les chansons sont traitées pour être téléchargées sur les juke-box. Ce cinquième écran (240) comprend donc essentiellement des zones (241.1 à 241.4) de saisie permettant d'indiquer toutes les informations sur les albums. Chaque zone (241) de saisie correspond à un argument du tableau ALBUM, fig. 3A de la base de données. Une première zone (241.1) contient l'identifiant de l'album. Une deuxième zone (241.2) contient le nom de l'album. Un troisième zone (241.3) contient le nom de l'artiste interprète de l'album. Une quatrième zone (241.4) contient le nom de la maison de disques. Le cinquième écran (240) comprend également une fenêtre (243) déroulante permettant d'afficher la liste des chansons de l'album identifié par son identifiant. Ainsi, la validation de la saisie par une sélection d'une première zone (242) de sélection déclenche la mise à jour par le serveur du tableau ALBUM, fig. 3A qui, soit modifie les arguments correspondants si la saisie consiste en une modification d'un album existant, soit ajoute une table dans le groupe de tables lorsque la saisie correspond à l'ajout d'un nouvel album dans la banque de chansons.

Un sixième écran (250) permet d'établir des listes de chansons (master). Ces listes peuvent ensuite être utilisées pour servir de point de départ pour l'initialisation de la liste de chansons disponibles sur un juke-box. Le sixième écran comprend une pluralité de zone de saisie permettant d'identifier la liste (251.1), par exemple, de décrire succinctement la liste (251.2) et de définir le type de liste (251.3) , c'est-à-dire s'il s'agit d'une liste en cours de réalisation ou d'une liste définitive. Chaque zone de saisie (251.1 à 251.3) correspond en fait à un argument du tableau MASTER, fig. 3B. Le sixième écran (250) comprend également une première fenêtre (252) déroulante comprenant la liste des chansons de la banque de chansons et une deuxième fenêtre (253) comprenant la liste des chansons déjà sélectionnées pour faire partie de la liste en cours. Le sixième écran (250) comprend également un bouton (254) de sauvegarde permettant de valider la liste établie. Cette sélection provoque soit la création d'une table dans le groupe de tables spécifiques MASTER, fig. 3B et la création pour chaque chanson de la nouvelle liste d'une table dans le groupe de tables spécifiques MASTER_CATALOGUE, fig. 3B, s'il s'agit d'une nouvelle liste, soit provoque l'ajout ou la suppression d'une table dans le groupe de tables spécifiques MASTER_CATALOGUE, fig. 3B s'il s'agit de la mise à jour d'une liste existante.

Un septième tableau (260) permet de visualiser toutes les rangées du tableau ARTIST, fig. 3A dans le cas où l'artiste est un éditeur, c'est-à-dire lorsqu'un argument déterminé (ART_PUPLISHER_FLAG) du tableau ARTISTE prend la valeur « vrai ». Cette collecte particulière d'information est réalisée par le serveur et permet de gérer les droits d'auteur associés à chaque éditeur. Pour ce faire, le septième écran (260) comprend une fenêtre déroulante (261) constituée d'une pluralité de lignes. Chaque ligne comprend un premier champ (261.1) représentant l'identifiant de l'artiste, un deuxième champ (261.2) représentant le nom de l'artiste, c'est-à-dire dans ce cas le nom de la compagnie d'édition, un troisième champ (261.3) représentant le nom de l'administrateur de la compagnie d'édition, un quatrième champ (261.4) permettant de savoir si l'éditeur est dans le catalogue, et une série de champs (261.5à 261.9) permettant de déterminer si l'éditeur accorde ou non les droits de reproduction et de diffusion. Ainsi, un premier champ (261.5) indique à quelle date l'autorisation écrite de diffusion a été accordée. Un deuxième champ (261.6) indique depuis quelle date la signature pour autorisation est en attente. Un troisième champ (261.7) indique depuis quelle date le contrat relatif à l'accord sur la diffusion des champs est en attente de commentaires. Un quatrième champ (261.8) indique à quelle date un accord verbal a été obtenu. Un cinquième champ (261.9) indique depuis quelle date il n'y a plus d'accord de diffusion.

Un septième écran (270) permet d'effectuer l'inventaire des programmes utilisés par les juke-box. Le septième écran (270) comprend une première fenêtre déroulante (271) permettant de visualiser la liste des versions des programmes ainsi que l'existence d'éventuelles incompatibilités avec d'autres programmes ou composants matériels. Ces informations sont affichées par l'intermédiaire d'une collecte d'information dans les tableaux PROGRAM et PROGRAM_INCOMPAT, fig. 3D de la base de données. Pour ce faire, un premier champ (271.1) contient le nom du programme. Un deuxième champ (271.2) contient la version du programme. Un troisième champ (271.3) contient le nom de la société distributrice du programme. Un quatrième champ (271.4) indique la date à laquelle le programme est disponible. Un cinquième champ (271.5) indique par qui le programme à éventuellement été modifié. Un sixième champ (271.6) indique s'il existe une ou des incompatibilités avec d'autres programmes. Un septième champ (271.6) indique s'il existe une ou des incompatibilités avec un ou des constituants matériels.

Une deuxième fenêtre déroulante (272) permet de visualiser, pour un programme sélectionné dans la première fenêtre (271), la liste des numéros de juke-box sur lequel est installé le programme, ainsi que sa date d'installation et éventuellement sa date de désinstallation. Ces informations sont affichées par l'intermédiaire d'une collecte d'informations dans le groupe de tables spécifiques SOFTWARE, fig. 3B de la base de données. La deuxième fenêtre comprend ainsi, un premier champ (272.1) contenant le numéro d'identifiant des juke-box sur lesquels est installé le programme. Un deuxième champ (272.2) contient la date d'installation du programme sur le juke-box. Un troisième champ (272.3) contient la date de suppression du programme sur le juke-box.

Une troisième fenêtre déroulante (273) permet de vérifier si le programme sélectionné dans la première fenêtre (271) est associé à un composant matériel. Ces informations sont affichées par l'intermédiaire d'une collecte d'informations dans les tableaux FIRMWARE et COMPONENT_DEF, fig 3B de la base de données. Ainsi, un premier champ (273.1) contient l'identifiant du composant. Un deuxième champ (273.2) contient la description ou le nom du composant. Un troisième champ (273.3) contient la date d'installation du composant.

Une quatrième fenêtre déroulante (274) permet de vérifier si le programme sélectionné dans la première fenêtre (271) fait l'objet d'un remplacement et éventuellement quelle est ou a été la date de remplacement du programme. Ces informations sont affichées par l'intermédiaire d'une collecte d'informations dans le groupe de tables spécifiques REMPLACEMENT_PROGRAMM, fig. 3D de la base de données. Ainsi, un premier champ (274.1) contient le nom du programme. Un deuxième champ (274.1) contient la version du programme. Un troisième champ (274.3) contient la date à laquelle le remplacement du programme a commencé. Un quatrième champ (274.4) indique à quelle date le remplacement du programme s'est terminé. Un cinquième champ (274.5) contient, par exemple, une description sommaire des modifications apportées au programme lors du remplacement.

D'autres écrans peuvent être créés sur le même modèle que ceux décrits précédemment pour visualiser d'autres informations contenues dans la base de données. Les informations affichées peuvent être le simple affichage des informations contenues dans un tableau de la base de donnée comme par exemple pour le premier écran (200), ou encore peuvent être le résultat d'une collecte sélective d'informations, c'est-à-dire que la recherche d'information est effectuée avec des critères particuliers comme, par exemple, pour le septième écran (260). De même, certains écrans peuvent ne pas comporter de zone de saisie, c'est-à-dire que ces écrans sont utilisés uniquement pour consulter les informations, comme par exemple le troisième écran (220).

On conçoit que le dispositif selon l'invention permet de gérer facilement de manière centralisée et à distance une pluralité de juke-box par l'intermédiaire d'un réseau de télécommunication, par exemple, de type téléphonique.

Selon une particularité de l'invention, le dispositif de gestion d'un réseau de systèmes de reproduction d'informations audiovisuelles ou juke-box comprend une base de données (11) comprenant une pluralité d'ensemble de tableaux (1101 à 1111), chaque tableau regroupant des informations, soit sur la constitution d'un juke-box (1102, 1104), soit sur l'utilisation du juke-box (1108, 1110, 1111), soit sur le paiement des redevances (1109), la base de données (11) est gérée par un serveur informatique (10) comportant des moyens de connexion avec les systèmes de reproduction d'informations audiovisuelles (100.1 à 100.n) pour, premièrement, recevoir des messages envoyés par chaque dispositif de reproduction d'informations audiovisuelles (100.1 à 100.n) et contenant des informations nécessaires à la mise à jour des ensembles de tableaux déterminés (1101 à 1111) de la base de données et, deuxièmement, pour émettre des messages vers chaque dispositif de reproduction d'informations audiovisuelles (100.1 à 100.n) afin de mettre à jour les données ou programme de chaque dispositif de reproduction d'informations audiovisuelles (100.1 à 100.n) par les informations mémorisées dans au moins un ensemble de tableaux (1110) de la base de données et transmises dans ce message.

Selon une autre particularité, un premier ensemble de tableaux (1101) mémorisé sur des moyens de mémorisation du serveur (10), comprend des informations d'ordre général sur l'état de fonctionnement du juke-box pour permettre la mise à jours des paramètres de fonctionnement de chaque juke-box, par l'intermédiaire d'échange de messages entre le serveur (10) et chaque juke-box.

Selon une autre particularité, le premier ensemble de tableaux comporte un numéro (JUK_ID) identifiant de manière unique chaque juke-box, le statut (JUK_STATUS) de fonctionnement du juke-box, le mot de passe (JUK_WAKE_UP_PASSW) autorisant le fonctionnement du juke-box, et la date d'installation du juke-box (JUK_INSTALLATION_DT), le numéro d'identifiant permettant au serveur (10) informatique de mettre à jour ou de consulter les données relatives au juke-box.

Selon une autre particularité, un deuxième ensemble de tableaux (1102) de la base de données, mémorisé sur des moyens de mémorisation du serveur (10), comprend des informations relatives à la constitution matérielle et logicielle de chaque juke-box, le deuxième ensemble de tableaux (1102) étant lié au premier ensemble de tableaux (1101) par un attribut déterminé pour établir une relation entre un juke-box et un matériel ou un logiciel décrit dans le deuxième ensemble de tableaux (1102).

Selon une autre particularité, le deuxième ensemble de tableaux comprend un groupe de tables (PROGRAMM) regroupant des informations représentative d'une description de l'ensemble des logiciels utilisables sur les juke-box, chaque programme étant identifié par au moins son nom (PGD_NAME) et le numéro de sa version (PGM_VERSION).

Selon une autre particularité, le deuxième ensemble de tableaux comprend un groupe de tables (SOFTWARE), regroupant pour chaque juke-box déterminé (JUK_ID) des informations représentatives des noms et versions des programmes installés sur chaque juke-box.

Selon une autre particularité, le deuxième ensemble de tableaux comprend un groupe de tables (COMPONENT), comprend la liste des composants matériels utilisables dans chaque juke-box, chaque composant étant identifié par un numéro (COD_ID), le groupe de tables (COMPONENT) comprenant également un argument correspondant au numéro (JUK-ID) du juke-box sur lequel est installé le composant, pour établir une relation entre un juke-box et un composant matériel utilisable décrits.

Selon une autre particularité, le deuxième ensemble de tableaux (1102) comprend un groupe de tables (PROGRAM_DEF) comportant les descriptions de chaque logiciel et/ou un groupe de tables (PROGRAMM_INCOMPAT) recensant les incompatibilités entre les logiciels et/ou un groupe de tables (COMPONENT_DEF) comportant les descriptions de chaque composant matériel, et/ou un groupe de tables (COMPONENT_INCOMPAT) recensant les incompatibilités entre les composants et les logiciels, et/ou un groupe de tables (FIRMWARE) comportant la liste des logiciels associés à des composants matériels, pour vérifier que le matériel et les logiciels installés sur chaque juke-box sont compatible entre eux.

Selon une autre particularité, un troisième ensemble de tableaux, mémorisé sur des moyens de mémorisation du serveur (10), et comportant un premier sous-ensemble (1103, IB_XXX) comprend l'ensemble des valeurs possibles pour les différents jeux paramètres de fonctionnement et de configuration de tous les juke-box, chaque valeur pour un jeu de paramètres étant identifiée par un numéro unique, pour établir une relation entre un juke-box et un jeu de paramètres.

Selon une autre particularité, un deuxième sous-ensemble du troisième ensemble de tableaux (1103, JUK_XXX) associe pour chaque identifiant (JUK_ID) de juke-box, un identifiant de jeu de paramètres de fonctionnement et de configuration contenus dans un groupe de tables du premier sous-ensemble (1103, IB_XXX) du premier groupe pour déterminer ou affecter un jeu de paramètre de fonctionnement à chaque juke-box.

Selon une autre particularité, les jeux de paramètres comprennent, les différents mots de passe possible regroupés dans un premier groupe de tables (IB_PASSWORD) et/ou les prix des chansons regroupés dans un deuxième groupe de tables (IB_TUNE_COST) et/ou le réglage d'une télécommande d'un juke-box regroupé dans un troisième groupe de tables (IB_REMOTE_CONTROL) et/ou le nombre de chansons gratuites utilisables regroupé dans un troisième groupe de tables (IB_CREDIT) et/ou les éléments de connections à Internet regroupés dans un quatrième groupe de tables (IB_ISP).

Selon une autre particularité, un quatrième ensemble de tableaux (1104) mémorisé sur les moyens de mémorisation du serveur est destiné à déterminer la liste des numéros (CLT_ID) de chansons disponibles sur un juke-box de numéro d'identifiant déterminé (JUK_ID), le quatrième ensemble de tableaux (1104) étant lié au premier ensemble de tableaux (1101) par un attribut déterminé pour établir une relation entre un juke-box et une chanson disponibles.

Selon une autre particularité, un cinquième ensemble de tableaux (1105) mémorisé sur les moyens de mémorisation du serveur, comprend des informations représentatives d'une description de toutes les chansons, artistes et albums constituant une banque de chansons de la base de données (11), chaque chanson étant identifiée par un numéro (CLT_ID), le cinquième ensemble de tableaux (1105) étant lié au quatrième ensemble de tableaux (1104) par un attribut déterminé pour établir une relation entre un juke-box et une chanson disponibles.

Selon une autre particularité, le cinquième ensemble tableaux (1105) comprend un groupe de tables (CATALOGUE) permettant de mémoriser des informations représentatives d'une description de chaque chanson de la banque de chansons et sa disponibilité sur chaque juke-box, un groupe de table (ALBUM) permettant de mémoriser des informations représentatives d'une description de chaque album de la banque de chansons et sa disponibilité sur chaque juke-box, et un groupe de tables (ARTISTE) permettant de mémoriser des informations représentatives d'une description de chaque artiste ou groupe d'artistes de la banque de chansons.

Selon une autre particularité, un sixième ensemble de tableaux (1106) mémorisé sur les moyens de mémorisation du serveur, comprend des informations relatives à la mise en place d'un filtre sur chaque juke-box pour éviter le téléchargement d'au moins une chanson choisie par un opérateur, le sixième ensemble de tableaux (1106) étant lié au premier ensemble de tableaux (1101) par un attribut déterminé pour établir une relation entre un juke-box et au moins un filtre.

Selon une autre particularité, le sixième ensemble de tableaux (1106) comprend une pluralité de groupe de tables (FLT_LABEL, FLT_ARTIST, FLT_CATALOGUE) lié au quatrième ou cinquième ensemble de tableaux (1104, 10115) par un attribut déterminé pour définir les critères de tous les filtres pouvant être mis en place sur chacun des juke-box et portant sur au moins un artiste déterminé (ART_ID) et/ou sur au moins une catégorie déterminée de chansons (CTG_ID) et/ou sur au moins une maison de disques déterminée (LAB_ID) et/ou sur au moins une chanson déterminée (CTL_ID), chaque filtre étant décrit dans un tableau (JUK_FILTER) et identifié par un numéro (JUF_ID) unique identifiant le filtre, ce numéro d'identification du filtre correspondant à attribut déterminé pour établir une relation entre un juke-box et le filtre.

Selon une autre particularité, le premier ensemble de tableaux (1101) comprend un argument correspondant à l'identifiant (JUF_ID) du ou des filtres appliqués au juke-box déterminé (JUK_ID), pour lier le premier ensemble de tableau au sixième ensemble de tableaux (1106).

Selon une autre particularité, un septième ensemble de tableaux (1107) mémorisé sur les moyens de mémorisation du serveur, comprend des informations relatives aux opérateurs propriétaires ou locataires de chaque juke-box, le septième ensemble de tableaux (1107) étant lié au premier ensemble de tableaux (1101) par un attribut déterminé pour établir une relation entre un juke-box et un opérateur.

Selon une autre particularité, un huitième ensemble de tableaux (1108) mémorisé sur les moyens de mémorisation du serveur, comprend des informations représentatives de l'historique de l'utilisation de chaque juke-box, le huitième ensemble de tableaux (1108) étant lié au premier ensemble de tableaux (1101) par un attribut déterminé pour établir une relation entre un juke-box et son historique d'utilisation.

Selon une autre particularité, le huitième ensemble de tableaux (1108) comprend un groupe de tables (PLAY_LOG) regroupant la liste de tous les identifiants (CLT_ID) des chansons diffusées sur chaque dispositif de reproduction d'informations audiovisuelles (100.1 à 100.n), la mise à jour de ce tableau étant effectuée par le serveur (10) lors de la réception d'un fichier de compte rendu, par un dispositif de reproduction d'informations audiovisuelles (100.1 à 100.n) déterminé et contenant la liste des chansons diffusées sur le juke-box.

Selon une autre particularité, un neuvième ensemble de tableaux (1109) mémorisé sur les moyens de mémorisation du serveur, comprend les informations nécessaires pour le calcul des redevances et pour le calcul de coût de location de chaque juke-box, le neuvième ensemble de tableaux (1109) étant lié au premier ensemble de tableaux (1101) par un attribut déterminé pour établir une relation entre un juke-box et le versement des redevances lié à l'utilisation du juke-box.

Selon une autre particularité, un dixième ensemble de tableaux (1110) mémorisé sur les moyens de mémorisation du serveur, comprend l'ensemble des instructions destinées à mettre à jour au moins un dispositif de reproduction d'informations audiovisuelles (100.1 à 100.n), ces instructions étant transmises au dispositif de reproduction d'informations audiovisuelles (100.1 à 100.n) concerné par le serveur (10), dès que le dispositif de reproduction d'informations audiovisuelles (100.1 à 100.n) établit une communication avec le serveur, le dixième ensemble de tableaux (1110) étant lié au premier ensemble de tableaux (1101) par un attribut déterminé pour établir une relation entre un juke-box et au moins une instruction de mise à jour.

Selon une autre particularité, le dixième ensemble de tableaux (1110) comprend un groupe de tables (INSTRUCTION) destiné à mémoriser les instructions (INS_ID) de mise à jour pour un juke-box déterminé (JUK_ID) et l'ordre (INS_SEQ) dans lequel les instructions doivent être exécutées sur le juke-box et/ou destiné à mémoriser la date (INS_TARGET_DT) à partir de laquelle le serveur (10) peut transmettre les instructions au juke-box.

Selon une autre particularité, les instructions mémorisées dans le onzième ensemble de table sont mémorisées avant la date (INS_TARGET_DT) à partir de laquelle le serveur (10) peut transmettre les instructions au juke-box.

Selon une autre particularité, le dixième ensemble de tableaux (1110) comprend une pluralité de groupes de tables (INS_SOFTWARE, INS_ALBUM, INS_CATALOGUE, INS_JEEP_SCRIPT, INS_IBUTTON) regroupant dans une groupe de tables déterminé les instructions de mise à jour possibles sur chaque juke-box, chaque instruction concernant, soit la mise à jour de logiciel (INS_SOFTWARE), soit l'ajout d'un nouvel album (INS_ALBUM) ou l'ajout d'une nouvelle chanson (INS_CATALOGUE) ou encore la gestion des fichiers informatiques d'un juke-box (INS_JEEP_SCRIPT) ou la modification d'un paramètre de fonctionnement d'un juke-box (INS_IBUTTON).

Selon une autre particularité, le dixième ensemble de tableaux (1110) comprend un groupe de tables spécifiques (EXECUTED_INSTRUCTION) regroupant tous les identifiants des instructions qui ont été transmises correctement à chaque juke-box, le groupe de tables spécifiques (EXECUTED_INSTRUCTION) regroupe également, pour chaque identifiant d'instruction (INS-ID), au moins l'identifiant du juke-box (JUK_ID) destinataire et la date de transmission (EXE_EXECUTION_DT) de l'instruction.

Selon une autre particularité, le dixième ensemble de tableaux (1110) comprend au moins un groupe de tables spécifiques (EVENT, EVENT_DEF) comprenant des informations permettant de définir des événements déclenchant un groupe d'instructions déterminées (INS_ID).

Selon une autre particularité, un premier sous-ensemble d'un onzième ensemble de tableaux (1111) mémorisé sur les moyens de mémorisation du serveur, comprend des informations relatives à la mise en place sur chaque juke-box de promotion sur la diffusion d'au moins une chanson disponible sur chaque juke-box, chaque promotion étant identifiée par un numéro (PRO_ID, PRI_ID) et en ce qu'un deuxième sous-ensemble du onzième ensemble de tableaux (1110) comprend les références (PRI_ID, PRO_ID) de la ou des promotions applicables à un juke-box déterminé (JUK_ID), le onzième ensemble de tableaux (1111) étant lié au premier ensemble de tableaux (1101) par un attribut déterminé pour établir une relation entre un juke-box et une promotion déterminée.

Selon une autre particularité, le premier sous ensemble du onzième ensemble de tableaux (1110) comprend au moins un groupe de tables spécifiques (PROMOTION, PRO_PACKAGE, PRO_PACKAGE_CATALOGUE, PRO_PACKAGE_ARTIST) comprenant des informations permettant de déterminer l'ensemble des chansons (CLT_ID, ART_ID) faisant l'objet de la promotion, et les dates de début et de fin de la promotion, et le premier sous ensemble du onzième ensemble de tableaux (1110) comprend également un groupe de tables spécifiques (PRICING) comprenant des informations permettant modifier le prix (PRI_AMOUNT) des chansons faisant l'objet de la promotion.

Selon une autre particularité, le paiement des redevances dues à la diffusion de l'ensemble des chansons faisant l'objet de la promotion est affecté au promoteur initiateur de la promotion.

Selon une autre particularité, le serveur (10) comprend un module de visualisation des informations de la base de données destiné à afficher au moins un écran (200 à 270) comprenant au moins une zone d'affichage d'informations et/ou au moins une zone de saisie d'informations et/ou au moins une zone de sélection d'information, chaque zone de sélection provoque la collecte d'informations par le serveur dans la base de données ou la validation des informations contenues dans chaque zone de saisie et chaque zone d'affichage comprend la valeur d'un argument de la base de données.

Selon une autre particularité le procédé de gestion d'un réseau de systèmes de reproduction d'informations audiovisuelles ou juke-box comprend un serveur informatique (10) comportant des moyens de connexion avec les systèmes de reproduction d'informations audiovisuelles (100.1 à 100.n), caractérisé en ce qu'il comprend :
- une étape de connexion d'un juke-box au serveur pour établir une communication,
- une étape de transferts d'au moins un message du juke-box vers le serveur
- une étape de traitement du message par le serveur pour identifier le juke-box ayant établi une communication et mettre à jour au moins une table d'une base de données assurant la gestion centralisée des juke-box,
- une étape de recherche dans au moins un groupe de tables de la base de données d'instructions pour la mise à jour du juke-box,
- une étape de construction d'un message puis de transferts du message du serveur contenant les instructions de mises à jour trouvées dans la base de données, vers le juke-box ayant établi la communication.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de gestion d'un réseau de systèmes de reproduction d'informations audiovisuelles ou juke-box, **caractérisé en ce qu'**il comprend une base de données (11) comprenant une pluralité d'ensemble de tableaux (1101 à 1111), chaque tableau regroupant des informations, soit sur la constitution d'un juke-box (1102, 1104), soit sur l'utilisation du juke-box (1108, 1110, 1111), soit sur le paiement des redevances (1109), la base de données (11) est gérée par un serveur informatique (10) comportant des moyens de connexion avec les systèmes de reproduction d'informations audiovisuelles (100.1 à 100.n) pour, premièrement, recevoir des messages envoyés par chaque dispositif de reproduction d'informations audiovisuelles (100.1 à 100.n) et contenant des informations nécessaires à la mise à jour des ensembles de tableaux déterminés (1101 à 1111) de la base de données et, deuxièmement, pour émettre des messages vers chaque dispositif de reproduction d'informations audiovisuelles (100.1 à 100.n) afin de mettre à jour les données ou programme de chaque dispositif de reproduction d'informations audiovisuelles (100.1 à 100.n) par les informations mémorisées dans au moins un ensemble de tableaux (1110) de la base de données et transmises dans ce message.

2. Dispositif de gestion d'un réseau de systèmes de reproduction d'informations audiovisuelles selon la revendication 1, **caractérisé en ce qu'**un premier ensemble de tableaux (1101) mémorisé sur des moyens de mémorisation du serveur (10), comprend des informations d'ordre général sur l'état de fonctionnement du juke-box pour permettre la mise à jours des paramètres de fonctionnement de chaque juke-box, par l'intermédiaire d'échange de messages entre le serveur (10) et chaque juke-box.

3. Dispositif de gestion d'un réseau de systèmes de reproduction d'informations audiovisuelles selon la revendication 2, **caractérisé en ce que** le premier ensemble de tableaux comporte un numéro (JUK_ID) identifiant de manière unique chaque juke-box, le statut (JUK_STATUS) de fonctionnement du juke-box, le mot de passe (JUK_WAKE_UP_PASSW) autorisant le fonctionnement du juke-box, et la date d'installation du juke-box (JUK_INSTALLATION_DT), le numéro d'identifiant permettant au serveur (10) informatique de mettre à jour ou de consulter les données relatives au juke-box.

4. Dispositif de gestion d'un réseau de systèmes de reproduction d'informations audiovisuelles selon l'une des revendications 1 à 3, **caractérisé en ce qu'**un deuxième ensemble de tableaux (1102) de la base de données, mémorisé sur des moyens de mémorisation du serveur (10), comprend des informations relatives à la constitution matérielle et logicielle de chaque juke-box, le deuxième ensemble de tableaux (1102) étant lié au premier ensemble de tableaux (1101) par un attribut déterminé pour établir une relation entre un juke-box et un matériel ou un logiciel décrit dans le deuxième ensemble de tableaux (1102).

5. Dispositif de gestion d'un réseau de systèmes de reproduction d'informations audiovisuelles selon la revendication 4, **caractérisé en ce que** le deuxième ensemble de tableaux comprend un groupe de tables (PROGRAMM) regroupant des informations représentative d'une description de l'ensemble des logiciels utilisables sur les juke-box, chaque programme étant identifié par au moins son nom (PGD_NAME) et le numéro de sa version (PGM_VERSION).

6. Dispositif de gestion d'un réseau de systèmes de reproduction d'informations audiovisuelles selon la revendication 5, **caractérisé en ce que** le deuxième ensemble de tableaux comprend un groupe de tables (SOFTWARE), regroupant pour chaque juke-box déterminé (JUK_ID) des informations représentatives des noms et versions des programmes installés sur chaque juke-box.

7. Dispositif de gestion d'un réseau de systèmes de reproduction d'informations audiovisuelles selon l'une des revendications 4 à 6, **caractérisé en ce que** le deuxième ensemble de tableaux comprend un groupe de tables (COMPONENT), comprend la liste des composants matériels utilisables dans chaque juke-box, chaque composant étant identifié par un numéro (COD_ID), le groupe de tables (COMPONENT) comprenant également un argument correspondant au numéro (JUK-ID) du juke-box sur lequel est installé le composant, pour établir une relation entre un juke-box et un composant matériel utilisable décrits.

8. Dispositif de gestion d'un réseau de systèmes de reproduction d'informations audiovisuelles selon l'une des revendications 4 à 7 , **caractérisé en ce que** le deuxième ensemble de tableaux (1102) comprend un groupe de tables (PROGRAM_DEF) comportant les descriptions de chaque logiciel et/ou un groupe de tables (PROGRAMM_INCOMPAT) recensant les incompatibilités entre les logiciels et/ou un groupe de tables (COMPONENT_DEF) comportant les descriptions de chaque composant matériel, et/ou un groupe de tables (COMPONENT_INCOMPAT) recensant les incompatibilités entre les composants et les logiciels, et/ou un groupe de tables (FIRMWARE) comportant la liste des logiciels associés à des composants matériels, pour vérifier que le matériel et les logiciels installés sur chaque juke-box sont compatible entre eux.

9. Dispositif de gestion d'un réseau de systèmes de reproduction d'informations audiovisuelles selon l'une des revendications 1 à 8, **caractérisé en ce qu'**un troisième ensemble de tableaux, mémorisé sur des moyens de mémorisation du serveur (10), et comportant un premier sous-ensemble (1103, IB_XXX) comprend l'ensemble des valeurs possibles pour les différents jeux paramètres de fonctionnement et de configuration de tous les juke-box, chaque valeur pour un jeu de paramètres étant identifiée par un numéro unique, pour établir une relation entre un juke-box et un jeu de paramètres.

10. Dispositif de gestion d'un réseau de systèmes de reproduction d'informations audiovisuelles selon la revendication 9, **caractérisé en ce qu'**un deuxième sous-ensemble du troisième ensemble de tableaux (1103, JUK_XXX) associe pour chaque identifiant (JUK_ID) de juke-box, un identifiant de jeu de paramètres de fonctionnement et de configuration contenus dans un groupe de tables du premier sous-ensemble (1103, IB_XXX) du premier groupe pour déterminer ou affecter un jeu de paramètre de fonctionnement à chaque juke-box.

11. Dispositif de gestion d'un réseau de systèmes de reproduction d'informations audiovisuelles selon la revendication 9 ou 10, **caractérisé en ce que** les jeux de paramètres comprennent, les différents mots de passe possible regroupés dans un premier groupe de tables (IB_PASSWORD) et/ou les prix des chansons regroupés dans un deuxième groupe de tables (IB_TUNE_COST) et/ou le réglage d'une télécommande d'un juke-box regroupé dans un troisième groupe de tables (IB_REMOTE_CONTROL) et/ou le nombre de chansons gratuites utilisables regroupé dans un troisième groupe de tables (IB_CREDIT) et/ou les éléments de connections à Internet regroupés dans un quatrième groupe de tables (IB_ISP).

12. Dispositif de gestion d'un réseau de systèmes de reproduction d'informations audiovisuelles selon l'une des revendications 1 à 11, **caractérisé en ce qu'**un quatrième ensemble de tableaux (1104) mémorisé sur les moyens de mémorisation du serveur est destiné à déterminer la liste des numéros (CLT_ID) de chansons disponibles sur un juke-box de numéro d'identifiant déterminé (JUK_ID), le quatrième ensemble de tableaux (1104) étant lié au premier ensemble de tableaux (1101) par un attribut déterminé pour établir une relation entre un juke-box et une chanson disponibles.

13. Dispositif de gestion d'un réseau de systèmes de reproduction d'informations audiovisuelles selon l'une des revendications 1 à 12, **caractérisé en ce qu'**un cinquième ensemble de tableaux (1105) mémorisé sur les moyens de mémorisation du serveur, comprend des informations représentatives d'une description de toutes les chansons, artistes et albums constituant une banque de chansons de la base de données (11), chaque chanson étant identifiée par un numéro (CLT_ID), le cinquième ensemble de tableaux (1105) étant lié au quatrième ensemble de tableaux (1104) par un attribut déterminé pour établir une relation entre un juke-box et une chanson disponibles.

14. Dispositif de gestion d'un réseau de systèmes de reproduction d'informations audiovisuelles selon la revendication 13, **caractérisé en ce que** le cinquième ensemble tableaux (1105) comprend un groupe de tables (CATALOGUE) permettant de mémoriser des informations représentatives d'une description de chaque chanson de la banque de chansons et sa disponibilité sur chaque juke-box, un groupe de table (ALBUM) permettant de mémoriser des informations représentatives d'une description de chaque album de la banque de chansons et sa disponibilité sur chaque juke-box, et un groupe de tables (ARTISTE) permettant de mémoriser des informations représentatives d'une description de chaque artiste ou groupe d'artistes de la banque de chansons.

15. Dispositif de gestion d'un réseau de systèmes de reproduction d'informations audiovisuelles selon l'une des revendications 1 à 14, **caractérisé en ce qu'**un sixième ensemble de tableaux (1106) mémorisé sur les moyens de mémorisation du serveur, comprend des informations relatives à la mise en place d'un filtre sur chaque juke-box pour éviter le téléchargement d'au moins une chanson choisie par un opérateur, le sixième ensemble de tableaux (1106) étant lié au premier ensemble de tableaux (1101) par un attribut déterminé pour établir une relation entre un juke-box et au moins un filtre.

16. Dispositif de gestion d'un réseau de systèmes de reproduction d'informations audiovisuelles selon les revendications 12, 13 et 15, **caractérisé en ce que** le sixième ensemble de tableaux (1106) comprend une pluralité de groupe de tables (FLT_LABEL, FLT_ARTIST, FLT_CATALOGUE) lié au quatrième ou cinquième ensemble de tableaux (1104, 10115) par un attribut déterminé pour définir les critères de tous les filtres pouvant être mis en place sur chacun des juke-box et portant sur au moins un artiste déterminé (ART_ID) et/ou sur au moins une catégorie déterminée de chansons (CTG_ID) et/ou sur au moins une maison de disques déterminée (LAB_ID) et/ou sur au moins une chanson déterminée (CTL_ID), chaque filtre étant décrit dans un tableau (JUK_FILTER) et identifié par un numéro (JUF_ID) unique identifiant le filtre, ce numéro d'identification du filtre correspondant à attribut déterminé pour établir une relation entre un juke-box et le filtre.

17. Dispositif de gestion d'un réseau de systèmes de reproduction d'informations audiovisuelles selon la revendication 15 ou 16, **caractérisé en ce que** le premier ensemble de tableaux (1101) comprend un argument correspondant à l'identifiant (JUF_ID) du ou des filtres appliqués au juke-box déterminé (JUK_ID), pour lier le premier ensemble de tableau au sixième ensemble de tableaux (1106).

18. Dispositif de gestion d'un réseau de systèmes de reproduction d'informations audiovisuelles selon l'une des revendications 1 à 17, **caractérisé en ce qu'**un septième ensemble de tableaux (1107) mémorisé sur les moyens de mémorisation du serveur, comprend des informations relatives aux opérateurs propriétaires ou locataires de chaque juke-box, le septième ensemble de tableaux (1107) étant lié au premier ensemble de tableaux (1101) par un attribut déterminé pour établir une relation entre un juke-box et un opérateur.

19. Dispositif de gestion d'un réseau de systèmes de reproduction d'informations audiovisuelles selon l'une des revendications 1 à 18, **caractérisé en ce qu'**un huitième ensemble de tableaux (1108) mémorisé sur les moyens de mémorisation du serveur, comprend des informations représentatives de l'historique de l'utilisation de chaque juke-box, le huitième ensemble de tableaux (1108) étant lié au premier ensemble de tableaux (1101) par un attribut déterminé pour établir une relation entre un juke-box et son historique d'utilisation.

20. Dispositif de gestion d'un réseau de systèmes de reproduction d'informations audiovisuelles selon la revendication 19, **caractérisé en ce que** le huitième ensemble de tableaux (1108) comprend un groupe de tables (PLAY_LOG) regroupant la liste de tous les identifiants (CLT_ID) des chansons diffusées sur chaque dispositif de reproduction d'informations audiovisuelles (100.1 à 100.n), la mise à jour de ce tableau étant effectuée par le serveur (10) lors de la réception d'un fichier de compte rendu, par un dispositif de reproduction d'informations audiovisuelles (100.1 à 100.n) déterminé et contenant la liste des chansons diffusées sur le juke-box.

21. Dispositif de gestion d'un réseau de systèmes de reproduction d'informations audiovisuelles selon l'une des revendications 1 à 12, **caractérisé en ce qu'**un neuvième ensemble de tableaux (1109) mémorisé sur les moyens de mémorisation du serveur, comprend les informations nécessaires pour le calcul des redevances et pour le calcul de coût de location de chaque juke-box, le neuvième ensemble de tableaux (1109) étant lié au premier ensemble de tableaux (1101) par un attribut déterminé pour établir une relation entre un juke-box et le versement des redevances lié à l'utilisation du juke-box.

22. Dispositif de gestion d'un réseau de systèmes de reproduction d'informations audiovisuelles selon l'une des revendications 1 à 21, **caractérisé en ce qu'**un dixième ensemble de tableaux (1110) mémorisé sur les moyens de mémorisation du serveur, comprend l'ensemble des instructions destinées à mettre à jour au moins un dispositif de reproduction d'informations audiovisuelles (100.1 à 100.n), ces instructions étant transmises au dispositif de reproduction d'informations audiovisuelles (100.1 à 100.n) concerné par le serveur (10), dès que le dispositif de reproduction d'informations audiovisuelles (100.1 à 100.n) établit une communication avec le serveur, le dixième ensemble de tableaux (1110) étant lié au premier ensemble de tableaux (1101) par un attribut déterminé pour établir une relation entre un juke-box et au moins une instruction de mise à jour.

23. Dispositif de gestion d'un réseau de systèmes de reproduction d'informations audiovisuelles selon la revendication 22, **caractérisé en ce que** le dixième ensemble de tableaux (1110) comprend un groupe de tables (INSTRUCTION) destiné à mémoriser les instructions (INS_ID) de mise à jour pour un juke-box déterminé (JUK_ID) et l'ordre (INS_SEQ) dans lequel les instructions doivent être exécutées sur le juke-box et/ou destiné à mémoriser la date (INS_TARGET_DT) à partir de laquelle le serveur (10) peut transmettre les instructions au juke-box.

24. Dispositif de gestion d'un réseau de systèmes de reproduction d'informations audiovisuelles selon la revendication 23, **caractérisé en ce que** les instructions mémorisées dans le onzième ensemble de table sont mémorisées avant la date (INS_TARGET_DT) à partir de laquelle le serveur (10) peut transmettre les instructions au juke-box.

25. Dispositif de gestion d'un réseau de systèmes de reproduction d'informations audiovisuelles selon l'une des revendications 22 à 24, **caractérisé en ce que** le dixième ensemble de tableaux (1110) comprend une pluralité de groupes de tables (INS_SOFTWARE, INS_ALBUM, INS_CATALOGUE, INS_JEEP_SCRIPT, INS_IBUTTON) regroupant dans une groupe de tables déterminé les instructions de mise à jour possibles sur chaque juke-box, chaque instruction concernant, soit la mise à jour de logiciel (INS_SOFTWARE), soit l'ajout d'un nouvel album (INS_ALBUM) ou l'ajout d'une nouvelle chanson (INS_CATALOGUE) ou encore la gestion des fichiers informatiques d'un juke-box (INS_JEEP_SCRIPT) ou la modification d'un paramètre de fonctionnement d'un juke-box (INS_IBUTTON).

26. Dispositif de gestion d'un réseau de systèmes de reproduction d'informations audiovisuelles selon l'une des revendications 22 à 25, **caractérisé en ce que** le dixième ensemble de tableaux (1110) comprend un groupe de tables spécifiques (EXECUTED_INSTRUCTION) regroupant tous les identifiants des instructions qui ont été transmises correctement à chaque juke-box, le groupe de tables spécifiques (EXECUTED_INSTRUCTION) regroupe également, pour chaque identifiant d'instruction (INS-ID), au moins l'identifiant du juke-box (JUK_ID) destinataire et la date de transmission (EXE_EXECUTION_DT) de l'instruction.

27. Dispositif de gestion d'un réseau de systèmes de reproduction d'informations audiovisuelles selon l'une des revendications 22 à 26,
**caractérisé en ce que** le dixième ensemble de tableaux (1110) comprend au moins un groupe de tables spécifiques (EVENT, EVENT_DEF) comprenant des informations permettant de définir des événements déclenchant un groupe d'instructions déterminées (INS_ID).

28. Dispositif de gestion d'un réseau de systèmes de reproduction d'informations audiovisuelles selon l'une des revendications 1 à 27, **caractérisé en ce qu'**un premier sous-ensemble d'un onzième ensemble de tableaux (1111) mémorisé sur les moyens de mémorisation du serveur, comprend des informations relatives à la mise en place sur chaque juke-box de promotion sur la diffusion d'au moins une chanson disponible sur chaque juke-box, chaque promotion étant identifiée par un numéro (PRO_ID, PRI_ID) et **en ce qu'**un deuxième sous-ensemble du onzième ensemble de tableaux (1110) comprend les références (PRI_ID, PRO_ID) de la ou des promotions applicables à un juke-box déterminé (JUK_ID), le onzième ensemble de tableaux (1111) étant lié au premier ensemble de tableaux (1101) par un attribut déterminé pour établir une relation entre un juke-box et une promotion déterminée.

29. Dispositif de gestion d'un réseau de systèmes de reproduction d'informations audiovisuelles selon la revendication 28, **caractérisé en ce que** le premier sous ensemble du onzième ensemble de tableaux (1110) comprend au moins un groupe de tables spécifiques (PROMOTION, PRO_PACKAGE, PRO_PACKAGE_CATALOGUE, PRO_PACKAGE_ARTIST) comprenant des informations permettant de déterminer l'ensemble des chansons (CLT_ID, ART_ID) faisant l'objet de la promotion, et les dates de début et de fin de la promotion, et le premier sous ensemble du onzième ensemble de tableaux (1110) comprend également un groupe de tables spécifiques (PRICING) comprenant des informations permettant modifier le prix (PRI_AMOUNT) des chansons faisant l'objet de la promotion.

30. Dispositif de gestion d'un réseau de systèmes de reproduction d'informations audiovisuelles selon la revendication 28, **caractérisé en ce que** le paiement des redevances dues à la diffusion de l'ensemble des chansons faisant l'objet de la promotion est affecté au promoteur initiateur de la promotion.

31. Dispositif de gestion d'un réseau de systèmes de reproduction d'informations audiovisuelles selon l'une des revendications 1 à 30, **caractérisé en ce que** le serveur (10) comprend un module de visualisation des informations de la base de données destiné à afficher au moins un écran (200 à 270) comprenant au moins une zone d'affichage d'informations et/ou au moins une zone de saisie d'informations et/ou au moins une zone de sélection d'information, chaque zone de sélection provoque la collecte d'informations par le serveur dans la base de données ou la validation des informations contenues dans chaque zone de saisie et chaque zone d'affichage comprend la valeur d'un argument de la base de données.

32. Procédé de gestion d'un réseau de systèmes de reproduction d'informations audiovisuelles ou juke-box comprenant un serveur informatique (10) comportant des moyens de connexion avec les systèmes de reproduction d'informations audiovisuelles (100.1 à 100.n), **caractérisé en ce qu'**il comprend :
- une étape de connexion d'un juke-box au serveur pour établir une communication,
- une étape de transferts d'au moins un message du juke-box vers le serveur
- une étape de traitement du message par le serveur pour identifier le juke-box ayant établi une communication et mettre à jour au moins une table d'une base de données assurant la gestion centralisée des juke-box,
- une étape de recherche dans au moins un groupe de tables de la base de données d'instructions pour la mise à jour du juke-box,
- une étape de construction d'un message puis de transferts du message du serveur contenant les instructions de mises à jour trouvées dans la base de données, vers le juke-box ayant établi la communication.
